# EUROPEAN PATENT SPECIFICATION

(11) **EP 1 519 370 B1**
(45) Date of publication and mention of the grant of the patent: **02.05.2007**
(21) Application number: 04255888.2
(22) Date of filing: 27.09.2004
(51) Int. Cl.: G11B 7/24, B41M 5/00

(54) **Information medium with printable surface layer**
Informationsträger mit bedruckbarer Oberfläche
Support d'information avec surface imprimable

(30) Priority: 25.09.2003 JP 2003332865
(43) Date of publication of application: 30.03.2005
(73) Proprietor: FUJIFILM Corporation, Minato-ku Tokyo (JP)
(72) Inventor: Matsubaguchi, Satoshi, c/o Fuji Photo Film Co. Ltd, Odawara-shi, Kanagawa (JP); Ose, Takayoshi, c/o Fuji Photo Film Co. Ltd., Odawara-shi, Kanagawa (JP)
(74) Representative: Stevens, Jason Paul

(56) References cited:
- EP-A- 1 251 013
- EP-A- 1 325 815
- US-A1- 2002 176 970
- US-A1- 2003 162 009

## Description

### BACKGROUND OF THE INVENTION

### Field of the Invention

The present invention relates to an information medium provided with a printable layer on which characters and photographs can be printed.

### Description of the Related Art

CDs (compact disks) and DVDs (digital versatile disks) are widely accepted as standardized information recording media in the marketplace.

Examples of CDs include CD-ROMs from which information can only be read, write-once type CD-Rs on which information is capable of being recorded only once, and rewritable CD-RWs on which information be rewritten numerous times.

The CD-ROMs have, for example, a structure in which a row of pits are formed at a track pitch of 1.6 µm on a transparent substrate having a diameter of 120 mm and a thickness of 1.2 mm, and have a recording capacity of about 650 MB. Information can be reproduced by irradiating the CD-ROMs with laser light having a wavelength of 770 to 790 nm at a linear velocity of 1.2 to 1.4 m/ s.

The DVDs include DVD-ROMs, DVD-Rs, and DVD-RWs similarly to the CDs.

The DVD-ROMs have a recording density about 6 to 8 times that of the CDs and have, for example, a structure in which two substrates having a thickness of about 0.6 mm are applied to each other, wherein, for example, pits are formed at a track pitch of 0.74 µm and information can be reproduced by irradiating the DVD-ROMs with laser light having a wavelength of 635 to 650 nm at a constant linear velocity of about 3.5 m/s.

In the fields of CDs and DVDs, information media have been recently developed which are provided with a printable layer formed on the surface opposite to the information-reproducible surface, such that an image can be printed by an ink jet printer (see, for example, Japanese Patent Application Laid-Open (JP-A) No. 2002-245671). An ultraviolet ray-curable resin is generally used for the printable layer of such an information medium. However, this printable layer made of an ultraviolet ray-curable resin cannot provide as high image quality as an ink jet recording sheet.

Also, if the printable layer made of an ultraviolet ray-curable resin is formed with a large thickness, it is necessary to increase the energy supplied when the ultraviolet ray-curable resin is cured, which may cause disk warpage and undesirable vertical deviation. For this reason why, the thickness of the printable layer must be made thin. As a result, an absorption capacity sufficient to absorb all liquid droplets of ink cannot be obtained, giving rise to a problem in the blurring stability of printed images.

Furthermore, the ultraviolet ray-curable resin causes skin irritation and there is therefore a problem concerning the safety of the material. Moreover, the ultraviolet ray-curable resin has problems concerning handling. For example, it must be stored at ordinary temperature in a dark place, has a short life, and has an unpleasant odor and thus adversely affects working environment.

Accordingly, these has been a need for an information medium provided with a printable layer, which can solve the above-mentioned problems, has high handling safety, is reduced blurring and allows a high quality image to be printed.

### SUMMARY OF THE INVENTION

The invention provides an information medium having a printable layer containing at least a base layer and a colorant receiving layer, wherein the colorant receiving layer contains at least microparticles, a binder and a cross-linking agent and has a thickness of 30 to 60 µm.

### DETAILED DESCRIPTION OF THE INVENTION

The information medium of the invention has a printable layer containing at least a base layer and a colorant receiving layer, wherein the colorant receiving layer contains at least microparticles, a binder and a cross-linking agent and has a thickness of 30 to 60 µm.

The information medium of the invention may be applied to a magnetic medium, an optical medium, and a semiconductor medium and may have any form including a disk shape, a tape shape and one stored in a cartridge. In the case of one stored in a cartridge, the information medium is preferably removable. The information medium of the invention is preferably a disk-like optical information recording medium (optical disk).

In the case where the information medium is an optical disk, it may be any one of disks including CDs, DVDs and optical disks using a bluish violet laser to record and reproduce information.

In the case of a medium using a bluish violet laser to record, it may be any one of an applied type such as DVDs and a type provided with a recording layer and a cover layer on a substrate having a thickness of 1.1 mm wherein laser light is introduced from the cover layer side.

The printable layer is generally formed on the side opposite to the surface from which laser light is introduced. However, the printable layer can be formed on the side from which laser light is introduced if it is formed on an area other than an area from which the laser is introduced.

The information medium of the invention is preferably a write-once type, though it may be any of a ROM type, a rewritable type and a write-once type.

### <Printable layer>

The information medium of the invention is provided with a printable layer containing at least a base layer and a colorant receiving layer. Each of the base layer and the colorant receiving layer of the printable layer will be explained hereinbelow.

### Colorant receiving layer

The colorant receiving layer in the invention contains at least microparticles, a binder and a cross-linking agent and may also contain a compound represented by the following formula (1) and/or a compound represented by the following formula (2) and various additives.

In the invention, the thickness of the colorant receiving layer is 30 to 60 µm. When the thickness of the colorant receiving layer is set to be in such a range, an absorption capacity sufficient to absorb all liquid droplets of ink is obtained, blurring can be decreased, and a high quality image can be printed.

When the thickness of the colorant receiving layer is less than 30 µm, an absorption capacity sufficient to absorb all liquid droplets of ink cannot be obtained, causing blurring. Also, when the thickness exceeds 60 µm, mechanical properties such as warpage and vertical deviation of the information medium deteriorate.

In the invention, the thickness of the colorant receiving layer is 30 to 60 µm as mentioned above. The thickness is preferably 35 to 55 µm and more preferably 35 to 50 µm.

In order to adjust the thickness of the colorant receiving layer in the range of 30 µm to 60 µm, the coating amount of a colorant receiving layer coating solution which will be explained later may be appropriately set such that the dry thickness of the colorant receiving layer is in the above range.

The colorant receiving layer in the invention may contain any known surfactant for the purpose of improving coatability and surface quality, a known surfactant having ionic conductivity for the purpose of suppressing frictional electrification and peeling electrification, an antioxidant and/or an ultraviolet absorbent for the purpose of improving a photo-color-fading property, and/or a sulfur-containing compound for the purpose of enhancing ozone fading resistance to such an extent that the effect of the invention is not impaired.

### Microparticles

The colorant receiving layer in the invention contains microparticles as mentioned above. Examples of the microparticles include vapor phase method silica, pseudo boehmite, aluminum oxide, titanium dioxide, barium sulfate, calcium silicate, zeolite, kaolinite, halloysite, mica, talc, calcium carbonate, magnesium carbonate, calcium sulfate and boehmite. Among these microparticles, vapor phase method silica, pseudo boehmite and aluminum oxide are preferable.

### -Vapor phase method silica-

Silica microparticles are roughly classified into wet method particles and dry method (vapor phase method) particles in general by its production method. In the wet method, a method in which a silicate is decomposed by an acid to produce active silica, the active silica is then moderately polymerized, and the polymerized silica is aggregated and precipitated to obtain silica hydrate is mainly used. As the vapor phase method which are currently and dominantly used, there are a method in which a silicon halide is subjected to high-temperature vapor phase hydrolysis (flame hydrolysis method), and a method (arc method) in which quarts sand and cokes are heated, reduced and vaporized by an arc in an electric furnace and the vaporized materials are oxidized with air. The "vapor phase method silica" means silica anhydride microparticles obtained by the vapor phase method.

The vapor phase method silica is suitable to form a three-dimensional structure having high percentage of void, though it is different from silica hydrate in density of silanol groups on the surfaces of particles and presence or absence of voids, and exhibits properties different from those of silica hydrate. The reason for this is not clarified, but is thought as follows. In the case of silica hydrate, the density of silanol groups on the surface of microparticles is as many as 5 to 8/nm² and therefore silica microparticles easily densely aggregate. Meanwhile, in the vapor phase method silica, the density of silanol groups on the surfaces of microparticles is as small as 2 to 3/nm² and therefore silica microparticles thin flocculate and, as a result, form a structure having high percentage of void.

The vapor phase method silica has high ink absorbing ability and high retention efficiency due to its large specific surface area. Also, because this silica has a low refractive index, it can impart transparency to the colorant receiving layer by dispersing it till it has a proper diameter and can provide a high color density and a good color developing property.

The average primary particle diameter of the vapor phase method silica particles is preferably 30 nm or less, more preferably 20 nm or less, still more preferably 10 nm or less, and most preferably 3 to 10 nm. The vapor phase silica particles tend to adhere to each other due to hydrogen bond of their silanol groups. Therefore, when the average primary particle diameter is 30 nm or less, the vapor phase method silica can form a structure having high percentage of void and can effectively improve an ink absorbing property.

Other inorganic pigment microparticles such as silica hydrate microparticles, colloidal silica, titanium dioxide, barium sulfate, calcium silicate, zeolite, kaolinite, halloysite, mica, talc, calcium carbonate, magnesium carbonate, calcium sulfate, boehmite and pseudo boehmite may be used together with the vapor phase method silica. When other inorganic pigment microparticles and the vapor phase method silica are combined, the content of the vapor phase method silica in all inorganic pigment microparticles is preferably 50% by mass or more, and more preferably 70% by mass or more.

### -Pseudo boehmite-

The pseudo boehmite is a stratified compound which is represented by Al₂O₃·xH₂O (1 < x < 2) and whose crystal has a (020) plane forming a huge plane and has a lattice constant d of 0.67 nm. Here, the pseudo boehmite has a structure including excess water between layers of the (020) plane. The pseudo boehmite well absorbs ink and is fixed. It can also improve ink absorbing ability and prevent blurring over time.

A sol-like pseudo boehmite (pseudo boehmite sol) is preferably used as a raw material because a smooth layer is easily obtained.

The average primary particle diameter of the pseudo boehmite particles is preferably 50 nm or less, more preferably 30 nm or less and most preferably in the range of 20 to 3 nm. When the average primary particle diameter is within the above range, a structure having high percentage of void can be formed and the ink absorbing ability of the colorant receiving layer can be further improved. The average primary particle diameter can be measured with, for example, an electron microscope. The BET specific surface area of each of the pseudo boehmite particles is preferably 40 to 500 m² and more preferably 200 to 500 m².

Moreover, the aspect ratio of each of the pseudo boehmite particles is preferably 3 to 10. As for the porous structure of the pseudo boehmite, the average pore radius is preferably 1 to 30 nm, and more preferably 2 to 15 nm. The pore volume of the pseudo boehmite is preferably 0.3 to 2.0 ml/g (cc/g), and more preferably 0.5 to 1.5 ml/g (cc/g). Here, the pore radius and pore volume are measured by a nitrogen absorption and desorption method. For example, they may be measured with a gas absorption and desorption analyzer, for example, Omnisoap369^{™} manufactured by Beckman Coulter, Inc.

The pseudo boehmite is preferably used in the form of a dispersion liquid in which it is dispersed in an aqueous solvent. The content of the pseudo boehmite in the dispersion liquid is preferably 60% by mass or less, more preferably 5 to 60% by mass, and most preferably 10 to 50% by mass.

The pseudo boehmite can be dispersed particularly effectively when the content is in the above range. For example, thickening and gelation caused by, for example, a reduction in the distance between the pseudo boehmite particles can be effectively suppressed.

The mass ratio of the vapor phase method silica (S) to the pseudo boehmite (A), namely (S:A), is preferably in the range of 95:5 to 5:95, more preferably in the range of from 80:20 to 20:80, and most preferably the range of 70:30 to 30:70.

When the vapor phase method silica is combined with the pseudo boehmite within the above range of the content ratio, blurring of all inks having plural colors over time can be effectively prevented regardless of hue. Even when a multicolor image is formed, a clear image with high resolution can be formed and kept.

### -Aluminum oxide-

Examples of aluminum oxide in the invention include anhydrous alumina such as α-alumina, δ-alumina, θ-alumina and χ-alumina and active aluminum oxide. δ-Alumina is preferable among them. From the viewpoint of a production method, alumina microparticles produced by a vapor phase method, namely, vapor phase method alumina microparticles obtained by hydrolyzing a gaseous metal chloride in the presence of water generated in an oxy-hydrogen reaction or at a temperature that is characteristic in such a reaction are preferable because the microparticles have a high specific surface area.

The form of the aluminum oxide can be, for example, fine particles, microparticles, very fine particles, powders, impalpable powders, or very fine powders having predetermined particle diameters. The average primary particle diameter of these particles is preferably 200 nm or less, more preferably 5 to 100 nm, and most preferably 5 to 20 nm. When the average primary particle diameter of the alumina microparticles is in the above range, a structure having high percentage of void can be formed and the ink absorbing ability of the colorant receiving layer can be further improved. It is noted that the average primary particle diameter can be measured with, for example, an electron microscope.

The aluminum oxide in the invention is preferably used in the form of a dispersion liquid. The content of aluminum oxide in the dispersion liquid is preferably 60% by mass or less, more preferably 5 to 60% by mass, and most preferably 10 to 50% by mass. When the content of aluminum oxide is in the above range, aluminum oxide can be more effectively dispersed. When the content of aluminum oxide in the dispersion solution is 60% by mass or less, it is possible to effectively suppress thickening and gelation caused by, for example, a reduction in the distance between the aluminum oxide microparticles in the dispersion liquid. Any of primary to tertiary amino groups and salts thereof and a cationic polymer having a quaternary ammonium base may be added as an aggregation inhibitor to the dispersion liquid. The amount of the aggregation inhibitor to be added is preferably 1 to 10% by mass, and more preferably 1 to 5% by mass based on the aluminum oxide microparticles. When the amount of the inhibitor is less than 1% by mass, dispersibility may deteriorate. Meanwhile, when the amount exceeds 10% by mass, decreased color density may be obtained at the time that an image is printed on the colorant receiving layer.

The solid content of the aforementioned aluminum oxide in the colorant receiving layer is preferably 50% by mass or more, and more preferably 60% by mass or more. When the content exceeds 60% by mass, it becomes possible to form a better porous structure, enabling a colorant receiving layer having sufficient ink absorbing ability. Here, the solid content of the aluminum oxide in the colorant receiving layer means the content calculated on the basis of components other than water in the composition of the colorant receiving layer.

In the invention, the aluminum oxide may be combined with other microparticles. When aluminum oxide is combined with other microparticles in the invention, the content of aluminum oxide in all microparticles is preferably 30% by mass or more, and more preferably 50% by mass or more.

The microparticles may be any of organic microparticles and inorganic microparticles. However, inorganic microparticles are preferable from the viewpoint of ink absorbing ability and image stability. Binder

As mentioned above, the colorant receiving layer in the invention contains a binder. The binder is preferably a water-soluble resin.

Examples of the water-soluble resin include polyvinyl alcohol resins, which have hydroxyl groups as hydrophilic structural units (e.g., a polyvinyl alcohol (PVA), acetoacetyl modified PVA, cation modified PVA, anion modified PVA, silanol modified PVA and polyvinylacetal), cellulose resins (e.g., methyl cellulose (MC), ethyl cellulose (EC), hydroxyethyl cellulose (HEC), carboxymethyl cellulose (CMC), hydroxypropyl cellulose (HPC), hydroxyethylmethyl cellulose and hydroxypropylmethyl cellulose], chitins, chitosans, starch, resins having ether bonds [e.g., a polyethylene oxide (PEO), polypropylene oxide (PPO), polyethylene glycol (PEG) and polyvinyl ether (PVE)] and resins having carbamoyl groups [e.g., a polyacrylamide (PAAM), polyvinylpyrrolidone (PVP) and polyacrylic acid hydrazide].

As the water-soluble resin, polyacrylates, maleic acid resins, alginates and gelatins having carboxy groups as dissociable groups may also be utilized.

Among the above resins, polyvinyl alcohol (PVA) resins are particularly preferable. Examples of the polyvinyl alcohol include those described in Japanese Patent Application Publication (JP-B) Nos. 4-52786, 5-67432 and 7-29479, Japanese Patent No. 2537827, JP-B No. 7-57553, Japanese Patent Nos. 2502998 and 3053231, JP-A No. 63-176173, Japanese Patent No. 2604367, JP-A Nos. 7-276787, 9-207425, 11-58941, 2000-135858, 2001-205924, 2001-287444, 62-278080 and 9-39373, Japanese Patent No. 2750433, JP-A Nos. 2000-158801, 2001-213045, 2001-328345, 8-324105 and 11-348417.

Examples of the water-soluble resin other than the polyvinyl alcohol resins include compounds described in JP-A No. 11-165461, paragraph Nos. [0011] to [0014].

One of these water-soluble resins may be used, or two or more of them can be used together. In the invention, the content of the water-soluble resin is preferably 9 to 40% by mass, and more preferably 12 to 33% by mass based on the total solid mass of the colorant receiving layer.

The polyvinyl alcohol resin may be combined with any of the aforementioned other water-soluble resins. When other water-soluble resin is combined with the polyvinyl alcohol resin, the content of the polyvinyl alcohol resin in all the water-soluble resins is preferably 50% by mass or more, and more preferably 70% by mass or more.

The polyvinyl alcohol resin has a hydroxyl group in the structural unit thereof. This hydroxyl groups and the silanol groups on the surfaces of silica microparticles form hydrogen bond, which makes it easy to form a three-dimensional network structure in which secondary particles of the silica microparticles are chain units. It is thought that the formation of the three-dimensional network structure makes it possible to form a colorant receiving layer having a porous structure with high percentage of void.

In ink jet recording, the porous colorant receiving layer thus obtained can rapidly absorb ink due to capillarity to form good circular dots free from ink blurring.

Polyvinyl alcohol having a degree of saponification of 70 to 99% is more preferable, and polyvinyl alcohol having a degree of saponification of 80 to 99% is particularly preferable from the viewpoint of transparency. Ratio of microparticles to water-soluble resin

The ratio (PB ratio (x/y)) by mass of the microparticles (x) to the water-soluble resin (y) largely affects the structure and strength of the colorant receiving layer. That is, when the mass ratio (PB ratio) is increased, percentage of void, pore volume and surface area (per unit mass) are increased, but the density and strength tend to drop.

In the colorant receiving layer in the invention, the mass ratio (PB ratio (x/y)) is preferably 1.5/1 to 10/1 from the viewpoint of prevention of defects caused by a too large PB ratio such as a reduction in layer strength and cracks at the time of drying, and prevention of deteriorated ink absorbing ability caused by a too small PB ratio, namely caused by voids being easily clogged with a resin and therefore percentage of void being reduced.

When the information medium is conveyed with the conveyor system of an ink jet recording printer, stress may be applied to the information medium. Moreover, it is preferable to prevent cracks and peeling of the colorant receiving layer when the information medium is cut into sheets. Therefore, the colorant receiving layer preferably has sufficient strength. In consideration of these cases, the PB ratio (x/y) is preferably 5/1 or less. On the other hand, the PB ratio (x/y) is preferably 2:1 or more from the viewpoint of securing of high-speed ink absorbing ability in an ink jet recording printer.

Specifically, when, for example, a coating solution prepared by dispersing the vapor phase method silica microparticles having an average primary particle diameter of 20 nm or less and the water-soluble resin in an aqueous solution in a PB ratio (x/y) of 2/ 1 to 5/ 1 is applied to a substrate and the coating layer is dried, a three-dimensional network structure in which the secondary particles of the silica microparticles constitute network chains is formed, whereby a light-transmittable porous film having an average pore diameter of 30 nm or less, a percentage of void of 50 to 80%, a specific pore volume of 0.5 ml/g or more, and a specific surface area of 100 m²/g or more can be easily formed.

### Cross-linking agent

The colorant receiving layer contains a cross-linking agent which can cross-link the binder. When the cross-linking agent is contained, the colorant receiving layer can be a porous layer cured by cross-linking reaction between the cross-linking agent and the binder.

A boron compound is preferable to cross-link the water-soluble resin, and particularly, a polyvinyl alcohol. Examples of the boron compound include borax, boric acid, borates (e.g., orthoborates, InBO₃, ScBO₃, YBO₃, LaBO₃, Mg₃(BO₃)₂, Co₃(BO₃)₂, diborates (e.g., Mg₂B₂O₅ and Co₂B₂O₅), methaborates (e.g., LiBO₂, Ca(BO₂)₂, NaBO₂ and KBO₂), tetraborates (e.g., Na₂B₄O₇ · 10H₂O) and pentaborates (e.g., KB₅O₈·4H₂O, Ca₂B₆O₁₁·7H₂O and CsB₅O₅). Among these boron compounds, borax, boric acid and borates are preferable, and boric acid is particularly preferable from the viewpoint of rapid initiation of cross-linking reaction.

As the cross-linking agent for the water-soluble resin, a compound other than the boron compound may also be used. Examples of such a cross-linking agent include aldehyde compounds such as formaldehyde, glyoxal, succinaldehyde, glutaraldehyde, dialdehyde starch and dialdehyde derivatives of vegetable gum; ketone compounds such as diacetyl, 1,2-cyclopentanedione and 3-hexene-2,5-dione; active halogen compounds such as bis(2-chloroethyl)urea, bis(2-chloroethyl)sulfone and sodium salt of 2,4-dichloro-6-hydroxy-s-triazine; active vinyl compounds such as divinylsulfone, 1,3-bis(vinylsulfonyl)-2-propanol, N,N'-ethylenebis(vinylsulfonylacetamide), divinyl ketone, 1,3-bis(acryloyl)urea and 1,3,5-triacryloyl-hexahydro-s-triazine; N-methylol compounds such as dimethylolurea and methyloldimethylhydantoin; melamine compounds such as trimethylolmelamine, alkylated methylolmelamine, melamine, benzoguanamine and melamine resins; epoxy compounds such as ethylene glycol diglycidyl ether, propylene glycol diglycidyl ether, polyethylene glycol diglycidyl ether, diglycerin polyglycidyl ether, spiroglycol diglycidyl ether and polyglycidyl ether of a phenol resin; isocyanate compounds such as 1,6-hexamethylene diisocyanate and xylylene diisocyanate; aziridine compounds described in U.S. Patent Nos. 3,017,280 and 2,983,611; carbodiimide compounds described in U.S. Patent No. 3,100,704; ethyleneimino compounds such as 1,6-hexamethylene-N,N'-bisethyleneurea; halogenated carboxyaldehyde compounds such as mucochloric acid and mucophenoxychloric acid; dioxane compounds such as 2,3-dihydroxydioxane; metal-containing compounds such as titanium lactate, aluminum sulfate, chrome alum, potassium alum, zirconyl acetate and chromium acetate; polyamine compounds such as tetraethylenepentamine; hydrazide compounds such as dihydrazide adipate; low molecules and polymers containing two or more oxazoline groups; anhydrides of polyvalent acids, acid chlorides and bissulfonate compounds described in U.S. Patent Nos. 2,725,294, 2,725,295, 2,726,162 and 3,834,902 and active ester compounds described in U.S. Patent Nos. 3,542,558 and 3,251,972.

One of these cross-linking agents may be used, or two or more of them can be used together.

The cross-linking agent is preferably supplied simultaneously with application of a coating solution (colorant receiving layer coating solution) for forming the porous colorant receiving layer, or before the coating layer formed by applying the colorant receiving layer coating solution exhibits a decreasing rate of dry speed. This operation is effective to prevent generation of cracks when the coating layer is dried. That is, simultaneously with the application of the coating solution, or before the coating layer exhibits a decreasing rate of dry speed, the boron compound solution (cross-linking agent solution) penetrates into the coating layer and quickly reacts with polyvinyl alcohol in the coating layer to allow the polyvinyl alcohol to be made gel (cured), whereby the strength of the coating layer is rapidly and remarkably improved.

Also, in the invention, a method of forming a colorant receiving layer may be preferably used wherein a solution (first solution) containing the binder and the compound represented by formula (1) and/or the compound represented by formula (2) is added to and re-dispersed in an aqueous dispersion containing the vapor phase method silica and a dispersant to obtain a coating solution, and the coating solution is applied to the surface of the base layer, and a solution (second solution) containing the cross-linking agent is applied to the coating layer simultaneously with the application of the coating solution, or during the course of drying of the resultant coating layer and before the coating layer exhibits a decreasing rate of dry speed. When this method is used, the cross-linking agent is preferably added to both the first and second solutions.

When gelatin is combined with polyvinyl alcohol, a compound known as a hardener for gelatin may be used together with the boron compound as cross-linking agents.

Examples of such a compound include aldehyde compounds such as formaldehyde, glyoxal and glutaraldehyde; ketone compounds such as diacetyl and cyclopentanedione; active halogen compounds such as bis(2-chloroethylurea)-2-hydroxy-4,6-dichloro-1,3,5-triazine and sodium salt of 2,4-dichloro-6-S-triazine; active vinyl compounds such as divinylsulfonic acid, 1,3-vinylsulfonyl-2-propanol, N,N'-ethylenebis(vinylsulfonylacetamide) and 1,3,5-triacryloyl-hexahydro-S-triazine; N-methylol compounds such as dimethylolurea and methyloldimethylhydantoin; isocyanate compounds such as 1,6-hexamethylenediisocyanate; aziridine compounds described in U.S. Patent Nos. 3,017,280 and 2,983,611; carboxyimide compounds described in U.S. Patent No. 3,100,704; epoxy compounds such as glycerol triglycidyl ether; ethyleneimino compounds such as 1,6-hexamethylene-N,N'-bisethyleneurea; halogenated carboxyaldehyde compounds such as mucochloric acid and mucophenoxychloric acid; dioxane compounds such as 2,3-dihydroxydioxane; chrome alum, potassium alum, zirconium sulfate and chromium acetate. When the boron compound is combined with any other cross-linking agent, the content of the boron compound in all cross-linking agents is preferably 50% by mass or more, and more preferably 70% by mass or more.

One of the boron compounds may be used, or two or more of them can be used together.

When the boron compound is applied, its solution is prepared by dissolving the boron compound in water and/or an organic solvent.

The concentration of the boron compound in the boron compound solution is preferably 0.05 to 10% by mass, and more preferably 0.1 to 7% by mass based on the mass of the boron compound solution.

As the solvent of the boron compound solution, water is generally used, and an aqueous mixed solvent containing water and an organic solvent miscible with water may also be used.

As the organic solvent, any solvent which dissolves the boron compound may be used. Examples of the organic solvent include alcohols such as methanol, ethanol, isopropyl alcohol and glycerin; ketones such as acetone and methyl ethyl ketone; esters such as methyl acetate and ethyl acetate; aromatic solvents such as toluene; ethers such as tetrahydrofuran; and halogenated carbon-including solvents such as dichloromethane.

### Mordant

In the invention, the colorant receiving layer preferably contains a mordant to improve water resistance of a formed image and prevent blurring of the formed image over time.

As the mordant, a cationic polymer (cationic mordant) is preferable. Presence of the mordant in the colorant receiving layer can improve water resistance and prevent blurring over time because the mordant interacts with liquid ink having an anionic dye as a colorant to stabilize the colorant.

However, if this mordant is directly added to a coating solution for forming the colorant receiving layer, the mordant and the vapor phase silica having an anionic charge may aggregate. Use of a method in which the mordant is used as another solution, and in which the solution is separately applied does not cause such aggregation of the inorganic pigment microparticles. Therefore, in the invention, the mordant is preferably contained in a solution (for example, a cross-linking agent solution) other than the dispersion of the vapor phase method silica.

As the cationic mordant, a polymer mordant containing as a cationic group any of primary to tertiary amino groups and a quaternary ammonium base is preferably used. A cationic non-polymer mordant may also be used.

The polymer mordant is preferably a homopolymer of a monomer (mordant monomer) containing any of primary to tertiary amino groups and salts thereof and a quaternary ammonium base, or a copolymer or a condensed polymer of the mordant monomer and any other monomer (hereinafter referred to as "non-mordant monomer"). These polymer mordants may be used in any form including a water-soluble polymer and water-dispersible latex particles.

Examples of the mordant monomer include trimethyl-p-vinylbenzylammonium chloride, trimethyl-m-vinylbenzylammonium chloride, triethyl-p-vinylbenzylammonium chloride, triethyl-m-vinylbenzylammonium chloride, N,N-dimethyl-N-ethyl-N-p-vinylbenzylammonium chloride, N,N-diethyl-N-methyl-N-p-vinylbenzylammonium chloride, N,N-dimethyl-N-n-propyl-N-p-vinylbenzylammonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, N,N-dimethyl-N-(4-methyl)benzyl-N-p-vinylbenzylammonium chloride, N,N-dimethyl-N-phenyl-N-p-vinylbenzylammonium chloride; trimethyl-p-vinylbenzylammonium bromide, trimethyl-m-vinylbenzylammonium bromide, trimethyl-p-vinylbenzylammonium sulfonate, trimethyl-m-vinylbenzylammonium sulfonate, trimethyl-p-vinylbenzylammonium acetate, trimethyl-m-vinylbenzylammonium acetate, N,N,N-triethyl-N-2-(4-vinylphenyl)ethylammonium chloride, N,N,N-triethyl-N-2-(3-vinylphenyl)ethylammonium chloride, N,N-diethyl-N-methyl-N-2-(4-vinylphenyl)ethylammonium chloride, N,N-diethyl-N-methyl-N-2-(4-vinylphenyl)ethylammonium acetate; and quaternary products of N,N-dimethylaminoethyl(meth)acrylate, N,N-diethylaminoethyl(meth)acrylate, N,N-dimethylaminopropyl(meth)acrylate, N,N-diethylaminopropyl(meth)acrylate, N,N-dimethylaminoethyl(meth)acrylamide, N,N-diethylaminoethyl(meth)acrylamide, N,N-dimethylaminopropyl(meth)acrylamide or N,N-diethylaminopropyl(meth)acrylamide, and methyl chloride, ethyl chloride, methyl bromide, ethyl bromide, methyl iodide or ethyl iodide, and sulfonates, alkylsulfonates, acetates and alkylcarboxylates obtained by substituting the anions of these products.

Specific example of these salts include trimethyl-2-(methacryloyloxy)ethylammonium chloride, triethyl-2-(methacryloyloxy)ethylammonium chloride, trimethyl-2-(acryloyloxy)ethylammonium chloride, triethyl-2-(acryloyloxy)ethylammonium chloride, trimethyl-3-(methacryloyloxy)propylammonium chloride, triethyl-3-(methacryloylolxy)propylammonium chloride, trimethyl-2-(methacryloylamino)ethylammonium chloride, triethyl-2-(methacryloylamino)ethylammonium chloride, trimethyl-2-(acryloylamino)ethylammonium chloride, triethyl-2-(acryloylamino)ethylammonium chloride, trimethyl-3-(methacryloylamino)propylammonium chloride, triethyl-3-(methacryloylamino)propylammonium chloride, trimethyl-3-(acryloylamino)propylammonium chloride, triethyl-3-(acryloylamino)propylammonium chloride; N,N-dimethyl-N-ethyl-2-(methacryloyloxy)ethylammonium chloride, N,N-diethyl-N-methyl-2-(methacryloyloxy)ethylammonium chloride, N,N-dimethyl-N-ethyl-3-(acryloylamino)propylammonium chloride, trimethyl-2-(methacryloyloxy)ethylammonium bromide, trimethyl-3-(acryloylamino)propylammonium bromide, trimethyl-2-(methacryloyloxy)ethylammonium sulfonate and trimethyl-3-(acryloylamino)propylammonium acetate.

Examples of other copolymerizable monomers include N-vinylimidazole and N-vinyl-2-methylimidazole.

The non-mordant monomer means a monomer which contains no basic or cationic moiety such as a primary to tertiary amino group or a salt thereof or a quaternary ammonium base and which does not interact or hardly interacts with the dye contained in ink jet ink.

Examples of the non-mordant monomer include alkyl (meth)acrylates; cycloalkyl (meth)acrylates such as cyclohexyl (meth)acrylate; aryl (meth)acrylates such as phenyl (meth)acrylate; aralkyl esters such as benzyl (meth)acrylate; aromatic vinyls such as styrene, vinyltoluene and α-methylstyrene; vinyl esters such as vinyl acetate, vinyl propionate and vinyl versatate; allyl esters such as allyl acetate; halogen-containing monomers such as vinylidene chloride and vinyl chloride; vinyl cyanides such as (meth)acrylonitrile; and olefins such as ethylene and propylene.

As the alkyl (meth)acrylate, alkyl (meth)acrylates with an alkyl moiety having 1 to 18 carbon atoms are preferable. Examples of the alkyl (meth)acrylates include methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, lauryl (meth)acrylate and stearyl (meth)acrylate.

Among these compounds, methyl acrylate, ethyl acrylate, methyl methacrylate, ethyl methacrylate and hydroxyethyl methacrylate are preferable.

One of the non-mordant monomers may be used, or two or more of them can be used together.

Furthermore, typical examples of the polymer mordant include polydiallyldimethylammonium chloride, polymethacryloyloxyethyl-β-hydroxyethyldimethylammonium chloride, polyethylenimine, polyallylamine, polyallylamine hydrochloride, polyamide-polyamine resin, cationic starch, dicyandiamido-formalin condensate, dimethyl-2-hydroxypropylammonium salt polymer, polyamidine and polyvinylamine.

The molecular weight of the polymer mordant is preferably 1,000 to 200.000, and more preferably 3,000 to 60,000 in terms of weight average molecular weight. When the molecular weight is in the range of 1,000 to 200,000, water resistance of the medium does not become insufficient and deterioration of handling aptitude of the medium caused by excessively increased viscosity is prevented.

As the cationic non-polymer mordant, for example, a water-soluble metal salt such as aluminum sulfate, aluminum chloride, aluminum polychloride or magnesium chloride is preferable. Compounds represented by formulae (1) and (2)

In the information medium of the invention, the colorant receiving layer preferably contains a compound represented by the following formula (1) and/or a compound represented by the following formula (2). These compounds represented by formulae (1) and (2) are solvents having a high boiling point.

RO(CH₂CH₂O)ₙH Formula (1)

In formula (1), R represents a saturated hydrocarbon group having 1 to 12 carbon atoms, an unsaturated hydrocarbon group having 1 to 12 carbon atoms, a phenyl group or an acyl group, and n denotes an integer from 1 to 3.

RO(CH₂CH(CH₃)O)ₙH Formula (2)

In formula (2), R represents a saturated hydrocarbon group having 1 to 12 carbon atoms, an unsaturated hydrocarbon group having 1 to 12 carbon atoms, a phenyl group or an acyl group, and n denotes an integer from 1 to 3.

Inclusion of the compound represented by formula (1) and/or the compound represented by formula (2) in the colorant receiving layer can suppress drying shrinkage of the colorant receiving layer when a three-dimensional network structure (porous structure) is formed. It is thought that this is because the compounds represented by formulae (1) and (2) moderately inhibit hydrogen bond between silanol groups on the surfaces of the vapor phase method silica particles and hydroxyl groups of polyvinyl alcohol. Thereby, cracks of the colorant receiving layer when a three-dimensional network structure is formed can be prevented, and therefore production yield and quality of the information medium can be improved.

Inclusion of a combination of the microparticles, polyvinyl alcohol, the boron compound, and the mordant in the colorant receiving layer makes it possible to improve glossiness, ink absorbing ability, blurring over time, light fastness, and print density (maximum density).

In formulae (1) and (2), R represents a saturated hydrocarbon group having 1 to 12 carbon atoms, an unsaturated hydrocarbon group having 1 to 12 carbon atoms, a phenyl group or an acyl group, and is preferably a saturated hydrocarbon group having 1 to 4 carbon atoms.

The number of carbons in the saturated hydrocarbon group is 1 to 12, preferably 1 to 8, and more preferably 1 to 4. Examples of the saturated hydrocarbon group include alkyl groups and alicyclic hydrocarbon groups. The saturated hydrocarbon groups may have a substituent. Specific examples of the saturated hydrocarbon group include a methyl group, an ethyl group, a propyl group, a butyl group, and a hexyl group. Among these compounds, a methyl group, an ethyl group, a propyl group, and a butyl group are preferable.

The number of carbons of the unsaturated hydrocarbon group is 1 to 12, preferably 1 to 8, and more preferably 1 to 4. Examples of the unsaturated hydrocarbon group include alkenyl groups and alkynyl groups. The unsaturated hydrocarbon group may have a substituent. Specific examples of the unsaturated hydrocarbon group include a vinyl group, an allyl group, an ethynyl group, a 1,3-butadienyl group, and a 2-propynyl group, and an allyl group is preferable.

The acyl group preferably has 1 to 8 carbon atoms and more preferably 1 to 4 carbon atoms. The acyl group may have a substituent. Specific examples of the acyl group include an acetyl group, a propionyl group, a butyryl group, and a valeryl group, and a butyryl group is preferable.

In formulae (1) and (2), n denotes an integer from 1 to 3, and is preferably 2 or 3.

The compounds represented by formulae (1) and (2) are preferably water-soluble compounds. Here, "water-soluble" compounds mean those soluble in water in an amount of 1 mass% or more. Specific examples of the compounds represented by formulae (1) and (2) include ethylene glycol monomethyl ether, ethylene glycol monoethyl ether, ethylene glycol monobutyl ether, ethylene glycol monohexyl ether, ethylene glycol monoallyl ether, ethylene glycol monphenyl ether, diethylene glycol monomethyl ether, diethylene glycol monoethyl ether, diethylene glycol monobutyl ether, diethylene glycol monohexyl ether, diethylene glycol monododecyl ether, triethylene glycol monomethyl ether, triethylene glycol monoethyl ether, triethylene glycol monobutyl ether, propylene glycol monomethyl ether, propylene glycol monoethyl ether and propylene glycol monobutyl ether. Among these compounds, diethylene glycol monobutyl ether and triethylene glycol monobutyl ether are preferable.

It is sufficient that the colorant receiving layer contains at least one of the compounds represented by formulae (1) and (2). Therefore, the colorant receiving layer may contain one or more compounds represented by formula (1) or (2), or may contain a combination of the compounds represented by formulae (1) and (2). When the compound represented by formula (1) (amount: x) is combined with the compound represented by formula (2) (amount: y), the mixing ratio (mass ratio) x:y is not limited, but is preferably 100:1 to 100: 100, and more preferably 100:10 to 100:50. Also, the total content of the compounds represented by formulae (1) and (2) in the colorant receiving layer is preferably 0.1 to 5.0 g/m², and more preferably 0.2 to 3.0 g/m².

### Other components

The colorant receiving layer may contain the following components, if necessary.

The colorant receiving layer may contain an anti-color fading agent such as an ultraviolet absorbent, an antioxidant, or a singlet oxygen quencher for the purpose of suppressing deterioration of the colorant.

Examples of the ultraviolet absorbent include cinnamic acid derivatives, benzophenone derivatives and benzotriazolylphenol derivatives. Specific examples of the ultraviolet absorbent include butyl α-cyano-phenylcinnamate, o-benzotriazolephenol, o-benzotriazole-p-chlorophenol, o-benzotriazole-2,4-di-t-butylphenol and o-benzotriazole-2,4-di-t-octylphenol. Hindered phenol compounds may also be used as the ultraviolet absorbent, and specifically, phenol derivatives having a branched alkyl group or groups at at least one of the second and sixth positions.

Benzotriazole ultraviolet absorbents, salicylic acid ultraviolet absorbents, cyanoacrylate ultraviolet absorbents and oxalic acid anilide ultraviolet absorbents may also be used. These ultraviolet absorbents are described in JP-A Nos. 47-10537, 58-111942, 58-212844, 59-19945, 59-46646, 59-109055 and 63-53544, JP-B Nos. 36-10466, 42-26187, 48-30492, 48-31255, 48-41572, 48-54965 and 50-10726, U.S. Patent Nos. 2,719,086, 3,707,375, 3,754,919 and 4,220,711.

A fluorescent whitening agent may also be used as the ultraviolet absorbent. Examples of the fluorescent whitening agent include cumarin fluorescent whitening agents. Specific examples of the cumarin fluorescent whitening agents are described, for example, in JP-B Nos. 45-4699 and 54-5324.

Examples of the antioxidant include those described in European Patent Application Laid-open Nos. 223,739, 309,401, 309,402, 310,551, 310,552 and 459,416, German Patent Laid-open No. 3,435,443, JP-A Nos. 54-48535, 60-107384, 60-107383, 60-125470, 60-125471, 60-125472, 60-287485, 60-287486, 60-287487, 60-287488, 61-160287, 61-185483, 61-211079, 62-146678, 62-146680, 62-146679, 62-282885, 62-262047, 63-051174, 63-89877, 63-88380, 66-88381, 63-113536; 63-163351, 63-203372, 63-224989, 63-251282, 63-267594, 63-182484, 1-239282, 2-262654, 2-71262, 3-121449, 4-291685, 4-291684, 5-61166, 5-119449, 5-188687, 5-188686, 5-110490, 5-1108437 and 5-170361, JP-B Nos. 48-43295 and 48-33212 and U.S. Patent Nos. 4,814,262 and 4,980,275.

Specific examples of the antioxidant include 6-ethoxy-1-phenyl-2,2,4-trimethyl-1,2-dihydroquinoline, 6-ethoxy-1-octyl-2,2,4-trimethyl-1,2-dihydroquinoline, 6-ethoxy-1-phenyl-2,2,4-trimethyl-1,2,3,4-tetrahydroquinoline, 6-ethoxy-1-octyl-2,2,4-trimethyl-1,2,3,4-tetrahydroquinoline, nickel cyclohexanoate, 2,2-bis(4-hydroxyphenyl)propane, 1,1-bis(4-hydroxyphenyl)-2-ethylhexane, 2-methyl-4-methoxy-diphenylamine and 1-methyl-2-phenylindole.

One of the anti-color fading agents may be used, or two or more of them can be used together. The anti-color fading agent may be water-solubilized, dispersed, or emulsified or may be included in microcapsules.

The amount of the anti-color fading agent to be added is preferably 0.01 to 10% by mass of the colorant receiving layer coating solution.

The colorant receiving layer may also contain any inorganic salt with the intention of improving dispersibility of the inorganic pigment microparticles, and an acid or an alkali serving as a pH control agent.

The colorant receiving layer may contain metal oxide microparticles having electronic conductivity with the intention of suppressing frictional electrification and peeling electrification, and any matting agent with the intention of decreasing surface frictional characteristics.

### Formation of colorant receiving layer

As mentioned above, the mordant is preferably introduced into the colorant receiving layer during the process of applying the aforementioned cross-linking agent solution. Specifically, the colorant receiving layer is preferably formed by a method (Wet On Wet (WOW) method) in which a coating solution (colorant receiving layer coating solution) containing the compound represented by formula (1) and/or the compound represented by formula (2), the microparticles, and the binder is applied to a substrate, and in which a solution (cross-linking agent solution) containing the cross-linking agent and the mordant is applied to the resultant coating layer simultaneously with the application of the coating solution, or during the course of drying of the coating layer and before the coating layer exhibits a decreasing rate of dry speed, followed by curing (cross-linking) the coating layer to which the cross-linking agent solution has been applied. In this method, the colorant receiving layer coating solution has a pH of 8.0 to 10.0, showing alkalinity.

The colorant receiving layer in the information medium of the invention can also be obtained by simultaneously applying the colorant receiving layer coating solution and the cross-linking agent solution to a substrate with a barrier solution including only a material or materials which do not react with the cross-linking agent interposed between these solutions, followed by curing the resultant coating layers. Here, the mordant is contained in at least one of the cross-linking agent solution and the barrier solution.

In the invention, the mordant and the cross-linking agent (boron compound) are simultaneously applied to the substrate, whereby water resistance of the colorant receiving layer can be improved, as mentioned above. To the contrary, if the mordant, which is cationic, is added to the colorant receiving layer coating solution, which includes the vapor phase method silica having an anionic charge on the surface thereof, the mordant and the silica may aggregate. However, if a method is adopted in which a solution containing the mordant and the colorant receiving layer coating solution are separately prepared and applied, it is unnecessary to take aggregation of the vapor phase silica into account, which increases types of mordant which can be used.

In the invention, the colorant receiving layer coating solution containing at least the compound represented by formula (1) and/or the compound represented by formula (2), the vapor phase silica and the polyvinyl alcohol may be prepared, for example, in the following manner.

The vapor phase silica is added to water (for example, in an amount of 10 to 20 % by mass), and the resultant mixture is stirred with a wet type colloid mill with a rotor which can rotate at a high speed (e.g., Clearmix (manufactured by M Technique) at a high rotation speed of 10,000 rpm (preferably 5,000 to 20,000 rpm) for 20 minutes (preferably 10 to 30 minutes). Thereafter, an aqueous polyvinyl alcohol solution is added to the mixture (such that the mass of the PVA is about 1/3 of the mass of the vapor phase method silica). Furthermore, the compound represented by formula (1) and/or the compound represented by formula (2) are added to and dispersed in the resultant mixture under the same rotation conditions as above, whereby the colorant receiving layer coating solution can be prepared. The resulting coating solution is uniform sol, which is applied to a substrate with the following coating machine so as to form a porous colorant receiving layer having a three-dimensional network structure. Although conventionally known various dispersing machines such as a high rotation dispersing machine, a medium agitation type dispersing machine (e.g., a ball mill and a sand mill), an ultrasonic dispersing machine, a colloid mill dispersing machine and a high-pressure dispersing machine may be used in the dispersing treatment, a colloid mill dispersing machine or a high-pressure dispersing machine is preferably used in the invention in order to efficiently fine massive particles and disperse the resultant microparticles.

A surfactant, a pH control agent, and/or an antistatic agent may be further added to the colorant receiving layer coating solution, if necessary.

Application of the colorant receiving layer coating solution may be carried out, for example, by a contact coating method such as bar coating, roll coating, blade coating, screen coating or Tampo coating, or a noncontact coating method such as spray coating, spin coating, curtain coating or dip coating.

When the colorant receiving layer coating solution is applied by spray coating, the pressure is preferably 1.013 to 2026 hPa, more preferably 50.65 to 1013 hPa, and still more preferably 101.3 to 506.5 hPa. The spread angle of the spray is preferably 1 to 120°, more preferably 10 to 60°, and still more preferably 20 to 50°. The liquid particle diameter is preferably 0.1 to 1,000 µm, more preferably 1 to 500 µm, and still more preferably 10 to 100 µm. The distance between the spray and a work (information medium) is preferably 1 to 1,000 mm, more preferably 10 to 200 mm, and still more preferably 30 to 100 mm. The temperature is preferably 10 to 40°C, more preferably 15 to 35°C, and still more preferably 20 to 30°C. The humidity is preferably 5 to 70% RH, more preferably 10 to 40% RH, and still more preferably 20 to 50% RH.

When the colorant receiving layer coating solution is applied by spin coating, the viscosity of each coating solution is preferably 0.1 to 10,000 mPa·s, more preferably 1 to 6,000 mPa·s, and still more preferably 10 to 3,000 mPa·s. The viscosity of the first liquid (colorant receiving layer coating solution) is preferably 50 to 10,000 mPa·s, more preferably 100 to 6,000 mPa·s, and still more preferably 200 to 3,000 mPa·s to secure sufficient thickness. The viscosity of the second liquid (cross-linking agent solution) is preferably 0.1 to 1,000 mPa·s, more preferably 1 to 500 mPa·s, and still more preferably 2 to 300 mPa·s to secure uniformity of the resultant coating layer. The number of rotations during dispensing is preferably 10 to 1,000 rpm, more preferably 50 to 600 rpm, and still more preferably 100 to 400 rpm. During sweeping, the number of rotations is gradually raised either step by step or smoothly, and is specifically, preferably 100 to 10,000 rpm, more preferably 200 to 5,000 rpm, and still more preferably 300 to 3,000 rpm. As for the shape of a nozzle, the length of the nozzle is preferably 1 to 100 mm, more preferably 5 to 50 mm, and still more preferably 10 to 30 mm. The inside diameter of the nozzle is preferably 0.1 to 5 mm, more preferably 0.3 to 3 mm, and still more preferably 0.5 to 2 mm. The thickness of the nozzle is preferably 0.1 to 1 mm, and more preferably 0.2 to 0.5 mm. The nozzle may be arranged aslant along the flow. The distance between the nozzle and a work is preferably 0.5 to 100 mm, more preferably 1 to 50 mm, and still more preferably 2 to 20 mm. The temperature is preferably 10 to 40°C, more preferably 15 to 35°C, and still more preferably 20 to 30°C. The humidity is preferably 5 to 70% RH, more preferably 10 to 40% RH, and still more preferably 20 to 50% RH.

After the colorant receiving layer coating solution is applied to the substrate, the cross-linking agent solution is applied to the resultant coating layer. The cross-linking agent solution may be applied before the coating layer exhibits a decreasing rate of dry speed. That is, the boron compound and the mordant are introduced in the colorant receiving layer during a period starting immediately after the colorant receiving layer coating solution has been applied and ending before the coating layer exhibits a decreasing rate of dry speed.

Here, the term "before the coating layer exhibits a decreasing rate of dry speed" generally indicates a period starting immediately after the application of the coating solution and ending several minutes just after the application. During this period, the coating layer exhibits a constant rate of dry speed, which means that the content of the solvent in the applied coating layer decreases in proportion with time. The period in which a constant rate of dry speed is observed is described in Chemical Engineering Handbook (pp. 707-712, published by Maruzen Co., Ltd., October 25, 1980).

As mentioned above, after the colorant receiving layer coating solution is applied, the coating layer is dried till the coating layer exhibits a decreasing rate of dry speed. The details of drying conditions are described below.

The colorant receiving layer may be dried by any drying method such as natural drying, hot air drying, infrared/far-infrared drying, high-frequency drying, or oven drying.

In the case of natural drying, the drying time of the first liquid (colorant receiving layer coating solution) is 0.1 to 10,000 seconds, more preferably 1 to 1,000 seconds, and still more preferably 10 to 500 seconds. The drying time of the second liquid (cross-linking agent solution) is 1 to 10,000 minutes, more preferably 5 to 1,000 minutes, and still more preferably 10 to 200 minutes. The drying temperature is preferably 0 to 40°C, more preferably 10 to 35°C, and still more preferably 20 to 30°C. The drying humidity is preferably 10 to 70% RH, more preferably 20 to 60% RH, and still more preferably 30 to 50% RH.

In the case of hot air drying, the drying time of the first liquid is preferably 0.1 to 5,000 seconds, more preferably 1 to 1,000 seconds, and still more preferably 10 to 500 seconds. The drying temperature is preferably 40 to 200°C, more preferably 60 to 150°C, and still more preferably 80 to 130°C. The drying humidity is preferably 0.01 to 50% RH, more preferably 0.1 to 30% RH, and still more preferably 1 to 20% RH.

In the case of infrared/far-infrared drying, the drying time of the first liquid is preferably 0.1 to 1,000 seconds, more preferably 1 to 500 seconds, and still more preferably 10 to 300 seconds. The drying time of the second liquid is preferably 1 to 2,000 seconds, more preferably 10 to 1,000 seconds, and still more preferably 30 to 500 seconds. The power is preferably 10 to 2,000 W, more preferably 50 to 1,500 W, and still more preferably 100 to 1,000 W.

The drying conditions in the case of high-frequency drying are the same as those in the case of infrared/far-infrared drying.

In the case of oven drying, the drying time of the first liquid is preferably 0.1 to 1,000 seconds, more preferably 1 to 500 seconds, and still more preferably 10 to 300 seconds. The drying time of the second liquid is preferably 1 to 2,000 seconds, more preferably 10 to 1,000 seconds, and still more preferably 30 to 500 seconds.

Examples of a method of applying the cross-linking agent solution before the coating layer exhibits a decreasing rate of dry speed include (1) a method in which the cross-linking agent solution is applied to the coating layer, (2) a method in which the solution is sprayed, and (3) a method in which a substrate on which the coating layer has been formed is dipped in the cross-linking agent solution.

In the above method (1), known coating methods using, for example a curtain flow coater, an extrusion die coater, an air doctor coater, a bread coater, a rod coater, a knife coater, a squeeze coater, a reverse roll coater, or a bar coater may be utilized. It is however, preferable to utilize a method using, for example, an extrusion die coater, a curtain flow coater, or a bar coater, which is not directly brought into contact with the coating layer.

The amount of the cross-linking agent solution containing at least the boron compound and the mordant and applied to the colorant receiving layer is such that the amount of the boron compound applied is generally 0.01 to 10 g/m² and preferably 0.05 to 5 g/m².

After the cross-linking agent solution is applied, the substrate is generally heated at a temperature in the range of 40 to 180°C for a period of 0.5 to 30 minutes to dry and cure the coating layer. It is preferably heated at a temperature in the range of 40 to 150°C for a period of 1 to 20 minutes.

When borax or boric acid is used as the boron compound to be contained in the cross-linking agent solution, heating is preferably carried out at a temperature in the range of 60 to 100°C for a period of 5 to 20 minutes.

Also, the cross-linking agent coating solution may be applied simultaneously with the application of the colorant receiving layer coating solution.

In this case, the colorant receiving layer coating solution and the cross-linking agent solution are simultaneously applied (multilayer application) to a substrate such that the colorant receiving layer coating solution is in contact with the substrate. Thereafter, the resultant coating layers are dried and cured, whereby the colorant receiving layer can be formed.

The simultaneous application (multilayer application) may be accomplished by a coating method using an extrusion die coater or curtain flow coater. After the simultaneous application, the formed coating layer is dried. At this time, the coating layer is dried by heating at a temperature in the range of 40 to 150°C for a period of 0.5 to 10 minutes and preferably at a temperature in the range of 40 to 100°C for a period of 0.5 to 5 minutes.

When borax or boric acid is used as the boron compound to be contained in the cross-linking agent solution, it is preferable to heat the coating layer at a temperature in the range of 60 to 100°C for a period of 5 to 20 minutes.

When an extrusion die coater is used to carry out the simultaneous application (multilayer application), the two coating solutions simultaneously discharged are formed into layers in the vicinity of the outlet of the extrusion die coater, namely, before they are transferred to a substrate. In this state, they are applied as layers on the substrate. The two layer coating solutions which have been multilayered easily cause cross-linking reaction at the boundary thereof. Accordingly, these two discharged solutions are mixed and easily thicken in a portion of the extrusion die coater which portion is near the outlet. This may hinder coating operation. Therefore, when these two solutions are simultaneously applied as mentioned above, a barrier layer solution (intermediate layer solution) including only a material or materials which do not react with the cross-linking agent is preferably interposed between the two solutions. In other words, it is preferable that the colorant receiving layer coating solution, the barrier layer solution, and the cross-linking agent solution containing the boron compound and the mordant are simultaneously applied to carry out simultaneous triple layer application.

The material(s) of the barrier layer solution can be any substance which does not react with the boron compound and which can form a liquid layer. Examples of the barrier solution include water, and an aqueous solution containing a trace of a water-soluble resin that does not react with the boron compound. The water-soluble resin is used with the intention of, for example, thickening, and selected in consideration of coatability. Examples of the water-soluble resin include polymers such as hydroxypropylmethyl cellulose, methyl cellulose, hydroxyethylmethyl cellulose, polyvinylpyrrolidone and gelatin.

It is noted that the barrier layer solution may also contain the mordant.

The colorant receiving layer in the invention may be formed as follows. A coating solution obtained by adding to and redispersing in an aqueous dispersion including the vapor phase method silica and a dispersant a solution (first solution) containing the compound represented by formula (1) and/or the compound represented by formula (2), the polyvinyl alcohol and the boron compound is applied to the surface of a substrate, and a solution (second solution) containing the boron compound and the mordant is applied to the resultant coating layer simultaneously with the application of the first solution, or during the course of drying of the coating layer and before the coating layer exhibits a decreasing rate of dry speed, followed by curing the coating layer. The pH of the first solution used to form the colorant receiving layer in this method is 2.5 to 4.0, and the first solution shows acidity. Use of this method improves glossiness and density of a printed image and is therefore preferable.

As the dispersant, a cationic polymer may be used. As the cationic polymer, a homopolymer of a monomer having any of primary to tertiary amino groups and salts thereof and a quaternary ammonium base, or a copolymer or a condensed polymer of the monomer and any other monomer may be preferably used. Also, the dispersant is preferably used in the form of a water-soluble polymer.

The molecular weight of the dispersant is preferably 1,000 to 200,000, and more preferably 3,000 to 60,000 in terms of weight average molecular weight. When the molecular weight is smaller than 1,000, dispersibility may become insufficient. When the molecular weight exceeds 200,000, the viscosity of the aqueous dispersion may increase. The amount of the dispersant is preferably 1% to 30% and more preferably 3% to 20% with respect to the vapor phase silica. When the amount is less than 1%, inferior dispersibility may be obtained. When the amount exceeds 30%, color density may decrease at the time that an image is formed on the colorant receiving layer.

When the aqueous dispersion including the vapor phase method silica and the dispersant is prepared, an aqueous dispersion of the vapor phase method silica may be prepared in advance and added to an aqueous solution of the dispersant. Alternatively, the aqueous solution of the dispersant may be added to the aqueous dispersion of the vapor phase method silica, or the aqueous dispersion and the aqueous solution may be simultaneously mixed. Also, powder of the vapor phase method silica rather than the aqueous dispersion thereof may be added to the aqueous solution of the dispersant.

After the vapor phase method silica is mixed with the dispersant, the resultant mixed solution may be stirred with a dispersing machine to fine particles contained therein. Thus, an aqueous dispersion containing particles with an average particle diameter of 50 to 300 nm can be obtained. Although conventionally known various dispersing machines such as a high rotation dispersing machine, a medium agitation type dispersing machine (e.g., a ball mill and a sand mill), an ultrasonic dispersing machine, a colloid mill dispersing machine and a high-pressure dispersing machine may be used as the dispersing machine used to obtain the aqueous dispersion, a colloid mill dispersing machine or a high-pressure dispersing machine is preferably used in order to efficiently fine massive particles and disperse the resultant microparticles.

As the solvent used in each step, water, an organic solvent, or a mixed solvent thereof may be used. Examples of the organic solvent which may be used for application include alcohols such as methanol, ethanol, n-propanol, iso-propanol and methoxypropanol, ketones such as acetone and methyl ethyl ketone, tetrahydrofuran, acetonitrile, ethyl acetate and toluene.

The colorant receiving layer is thus formed on the substrate. Thereafter, the colorant receiving layer may be calendered with, for example, a super calender or a gloss calender. Specifically, the colorant receiving layer may be made to pass between a roll nip while the colorant receiving layer is being heated and pressurized. This makes it possible to improve surface smoothness, glossiness, transparency and coating layer strength. However, the calendering treatment sometimes causes a reduction in percentage of void (namely, ink absorbing ability may deteriorate) and it is therefore necessary to conduct calendering such that the degree of reduction in percentage of void is low.

The roll temperature at the time of calendering treatment is preferably 30 to 150°C, and more preferably 40 to 100°C.

The linear load between rolls at the time of calendering treatment is preferably 50 to 400 kg/cm, and more preferably 100 to 200 kg/cm.

The pore diameter of the colorant receiving layer is preferably 0.005 to 0.030 µm, and more preferably 0.01 to 0.025 µm in terms of median diameter.

The percentage of void and the pore median diameter may be measured with a mercury porosimeter (Pore Sizer 9320-PC2^{™} manufactured by Shimadzu Corporation).

The colorant receiving layer preferably has high transparency. As for a measure of transparency, the haze value of the colorant receiving layer formed on a transparent film substrate is preferably 30% or less, and more preferably 20% or less.

The haze value may be measured with a haze meter (HGM-2DP manufactured by Suga Test Instrument Co., Ltd.).

As mentioned above, the colorant receiving layer contains the microparticles, the polyvinyl alcohol, the boron compound and the mordant, whereby drying shrinkage of the colorant receiving layer can be suppressed and layer cracks can be prevented without deteriorating other ink receiving properties when a porous structure is formed. Further, adhesion between the substrate and the colorant receiving layer can be improved. Also, When the colorant receiving layer contains the vapor phase method silica and has a three-dimensional network structure having a percentage of void of 50 to 80%, it is possible, at the same time, to secure such excellent ink receiving properties that the colorant receiving layer exhibits good ink absorbing ability and enables formation of an image with high resolution, high density, high light fastness and water resistance, and that blurring over time under high temperature and high moisture conditions can be suppressed.

The information medium of the invention can exhibit a glossiness of 30% or more at 60°. The glossiness may be measured with a digital variable gloss meter (UGV-50DP manufactured by Suga Test Instrument Co., Ltd.).

Unlike those made of an ultraviolet-curable resin, the colorant receiving layer of the information medium of the invention needs a decreased amount of ultraviolet rays to be irradiated to the information medium and recording characteristics such as jitter can be improved as mentioned above. Also, unlike the ultraviolet-curable resin, the colorant receiving layer does not irritate skin and therefore has high handling safety.

When ink jet recording sheets are bent with strong force, defects such as cracks on the surface thereof occur. However, the information medium of the invention is provided with a substrate (which will be described later) which is thicker and stronger against stress from the outside such as bending stress than that of the ink jet recording sheets. Base layer

When the information medium has a highly opaque base layer, it has diffusibility close to that of paper, improving image quality. In particular, when the information medium has a white base layer, color reproducibility can be improved. When the information medium has a base layer with high glossiness, an image formed thereon is like a glossy photograph. When the information medium has a base layer with a highly matting property, an image formed thereon is like a matt photograph. When various colors are used for the base layer, images having a variety of impressions can be formed. In the case of a fluorescent base layer, a fluorescent image can be made. Although there is no particular limitation to a method of forming such a base layer, it is preferable to form a radiation-curable resin layer by screen printing from the viewpoint of productivity. The radiation-curable resin is one cured by an electromagnetic wave such as ultraviolet rays, electron beams, X-rays, γ-rays or infrared rays. Among these radiation rays, ultraviolet rays and electron beams are preferable as the radiation.

The thickness of the base layer is preferably 0.1 to 100 µm, more preferably 1 to 50 µm, and most preferably 3 to 20 µm.

### Intermediate layer

The information medium of the invention may have an intermediate layer between the colorant receiving layer and the base layer. When the intermediate layer has high ink absorbing ability, the amount of ink which the information medium can receive is increased, and color density and image quality can be improved at the time of image printing. Alternatively, the intermediate layer can be provided between the base layer and the substrate. In this case, it is possible to improve adhesion between the base layer and the substrate and to control warpage of the entire information medium.

The thickness of the intermediate layer is preferably 0.1 to 100 µm, more preferably 1 to 50 µm, and most preferably 3 to 20 µm.

### Surface layer

The information medium of the invention may have a surface layer on the colorant receiving layer. The surface layer can more improve surface strength and preservability of a printed image. The surface layer must receive ink, or make ink to quickly pass through the surface layer.

The thickness of the surface layer is preferably 0.01 to 100 µm, more preferably 0.1 to 10 µm, and most preferably 0.5 to 5 µm.

The substrate and each of these layers used in the invention will be hereinafter explained. The layer structure and materials are only examples and the invention is not limited by them.

### Substrate

The substrate can be made of any material selected from various materials which are used as substrate materials of conventional optical recording media.

Specific examples of the substrate material include glass; polycarbonates; acrylic resins such as polymethyl methacrylate; vinyl chloride resins such as polyvinyl chloride and vinyl chloride copolymers; epoxy resins; amorphous polyolefins; polyesters; and metals such as aluminum. These materials may be combined, if necessary.

Among the above materials, amorphous polyolefins and polycarbonates are preferable and polycarbonates are particularly preferable from the viewpoints of moisture resistance and low cost. The thickness of the substrate is preferably 0.5 to 1.2 mm, and more preferably 0.6 to 1.1 mm.

A guide groove or grooves for tracking, or an irregularity or irregularities (pre-groove) representing information such as address signals are formed on the substrate.

In the case of a medium in which information is recorded with a bluish violet laser, the track pitch of the pre-groove(s) is preferably in the range of 200 to 800 nm, more preferably in the range of 200 to 500 nm, and still more preferably in the range of 200 to 400 nm.

Also, the depth of the pre-groove(s) (groove depth) is preferably in the range of 10 to 180 nm, and more preferably in the range of 20 to 150 nm.

Moreover, the half breadth of the pre-groove(s) is preferably in the range of 200 to 400 nm, more preferably in the range of 230 to 380 nm, and still more preferably in the range of 250 to 350 nm.

In the case of DVD-Rs or DVD-RWs, the track pitch of the pre-groove(s) is preferably in the range of 300 to 900 nm, more preferably in the range of 350 to 850 nm, and still more preferably in the range of 400 to 800 nm.

Also, the depth of the pre-groove(s) (groove depth) is preferably in the range of 100 to 160 nm, more preferably in the range of 120 to 150 nm, and still more preferably in the range of 130 to 140 nm.

Moreover, the half breadth of the pre-groove(s) is preferably in the range of 200 to 400 nm, more preferably in the range of 230 to 380 nm, and still more preferably in the range of 250 to 350 nm.

In the case of CD-Rs or CD-RWs, the track pitch of the pre-groove(s) is preferably in the range of 1.2 to 2.0 µm, more preferably in the range of 1.4 to 1.8 µm, and still more preferably in the range of 1.55 to 1.65 µm.

Also, the depth of the pre-groove(s) (groove depth) is preferably in the range of 100 to 250 nm, more preferably in the range of 150 to 230 nm, and still more preferably in the range of 170 to 210 nm.

Moreover, the half breadth of the pre-groove(s) is preferably in the range of 400 to 650 nm, more preferably in the range of 480 to 600 nm, and still more preferably in the range of 500 to 580 nm.

### Recording layer

In the case of CD-Rs or DVD-Rs, the recording layer is formed in the following manner. A dye serving as a recording material and a binder are dissolved in a proper solvent and then the resulting coating solution is applied to the surface of the substrate, on which surface the pre-groove is formed, by a spin coating method to form a coating layer, followed by drying.

The temperature in the spin coating method is preferably 23°C or more, and more preferably 25°C or more. Although there is limitation to the upper limit of the temperature, the temperature must be lower than the flash point of the solvent and is preferably 35°C.

When the temperature is less than 23°C, the drying rate of the solvent slows down and therefore an intended dye layer thickness (thickness of the recording layer) my not be obtained. Moreover, the application and drying require more time, reducing productivity.

Examples of the dye include a cyanine dye, an oxonol dye, a metal complex dye, an azo dye and a phthalocycanine dye. Among these dyes, a phthalocycanine dye is preferable.

Dyes described in JP-A Nos. 4-74690, 8-127174, 11-53758, 11-334204, 11-334205, 11-334206, 11-334207, 2,000-43423, 2,000-108513 and 2,000-158818 are also preferably used.

Examples of the solvent of the coating solution include esters such as butyl acetate, ethyl lactate and 2-methoxyethyl acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, iso-propanol, n-butanol and diacetone alcohol; fluorinated solvents such as 2,2,3,3-tetrafluoropropanol; and glycol ethers such as ethylene glycol monomethyl ether, ethylene glycol monoethyl ether and propylene glycol monomethyl ether.

One of these solvents may be used, or two or more of them can be used together in consideration of solubility of the recording material. Various additives such as an antioxidant, a UV absorbent, a plasticizer and a lubricant may be added to the coating solution according to the purpose.

When the coating solution includes a binder, examples of the binder include natural organic polymer materials such as a gelatin, cellulose derivative, dextran, rosin and rubber; and synthetic organic polymers such as hydrocarbon resins, e.g., polyethylene, polypropylene, polystyrene and polyisobutylene, vinyl resins, e.g., polyvinyl chloride, polyvinylidene chloride and polyvinyl chloride/polyvinyl acetate copolymer, acrylic resins, e.g., poly(methyl acrylate) and poly(methyl methacrylate), polyvinyl alcohol, chlorinated polyethylene, epoxy resins, butyral resins, rubber derivatives and initial condensates of thermosetting resins such as phenol/formaldehyde resins. When the binder is used as one of materials of the recording layer, the amount of the binder is usually 0.01 to 50 times, and preferably 0.1 to 5 times as much as that of the recording material in terms of mass ratio. The concentration of the recording material in the coating solution prepared in the above manner is generally in the range of 0.01 to 10 % by mass, and preferably 0.1 to 5 % by mass.

The coating method can be a spin coating method as mentioned above. An apparatus used in this method can be conventionally known one.

The recording layer may be a single layer or multi layers. The thickness thereof is generally in the range of 20 to 500 nm, preferably in the range of 30 to 300 nm, and more preferably in the range of 50 to 100 nm.

The recording layer may contain any anti-color fading agent to improve light fastness of the recording layer.

As the anti-color fading agent, a singlet oxygen quencher is usually used. As the singlet oxygen quencher, those described in publications such as already known patent specifications may be used.

Specific examples of the singlet oxygen quencher include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, JP-B Nos. 1-38680 and 6-26028, German Patent No. 350,399 and Journal of Japan Chemical Society, the October issue, 1992, page 1141.

The amount of the singlet oxygen quencher is usually in the range of 0.1 to 50 % by mass, preferably in the range of 0.5 to 45 % by mass, more preferably in the range of 3 to 40 % by mass, and still more preferably in the range of 5 to 25 % by mass based on the amount of the dye.

In the case of CD-RWs or DVD-RWs, the recording layer is preferably made of an optical recording material whose phase can change, which is constituted of at least Ag, Al, Te and Sb, and which can take at least two states including a crystal state and an amorphous state. Such a recording layer can be formed by a known method.

A known dielectric layer is formed on the recording layer, if necessary.

### Optical reflecting layer

After the recording layer is formed, a light reflecting layer is formed on the recording layer by vapor deposition, sputtering or ion plating of a light reflecting material. When the light reflecting layer is formed, a mask is usually used, whereby an area where the light reflecting layer is formed can be controlled.

The light reflecting layer contains a light reflecting material having a high reflectance with respect to laser light. The reflectance is preferably 70% or more.

Examples of the light reflecting material having a high reflectance include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, and stainless steel. One of these light reflecting materials may be used, or two or more of them can be used together or can be used as an alloy. Among these materials, Cr, Ni, Pt, Cu, Ag, Au, Al and stainless steel are preferable, Au, Ag, Al and alloys of these metals are more preferable, and Au and Ag and alloys of these metals are most preferable.

The thickness of the light reflecting layer is usually in the range of 10 to 300 nm, and preferably in the range of 50 to 200 nm. Protective layer, protective substrate

After the light reflecting layer is formed, a protective layer is formed on the light reflecting layer.

The protective layer is formed by a spin coating method. Use of the spin coating method makes it possible to form a protective layer without damaging the recording layer (e.g., dissolution of dyes and chemical reaction between the dye and the protective layer materials). The number of rotations in the spin coating is preferably 50 to 8,000 rpm, and more preferably 100 to 5,000 rpm from the viewpoint of formation of a uniform layer and prevention of any damage to the recording layer.

When a radiation-curable resin (ultraviolet ray-curable resin) is used as the protective layer material, the protective layer is formed by a spin coating method and then irradiated with ultraviolet rays from an ultraviolet ray radiation lamp (metal halide lamp) to cure the ultraviolet ray-curable resin.

The protective layer can be allowed to stand for a fixed time before the resin is cured in order to prevent formation of a protective layer having uneven thickness.

The protective layer prevents ingress of moisture and generation of scratches. The material of the protective layer is preferably a radiation-curable resin, a visible ray-curable resin, a thermosetting resin or silicon dioxide, and particularly preferably a radiation-curable resin. Examples of the radiation-curable resin include ultraviolet ray-curable resins such as "SD-640" manufactured by Dainippon Ink and Chemicals Incorporated. SD-347 (manufactured by Dainippon Ink and Chemicals Incorporated), SD-694 (manufactured by Dainippon Ink and Chemicals Incorporated), or SKCD 1051 (manufactured by SKC) may also be used. The thickness of the protective layer is preferably in the range of 1 to 200 µm and more preferably in the range of 50 to 150 µm.

In a layer structure in which the protective layer is used as a laser optical path, the protective layer must have transparency. Here, the term "transparency" means that the protective layer is transparent (transmittance: 90% or more) enough to transmit recording light and reproducing light.

In the case of DVD-Rs and DVD-RWs, an adhesive layer made of an ultraviolet ray-curable resin and a protective substrate having a thickness of about 0.6 mm and made of the same material as that of the substrate) are laminated on the light reflecting layter in place of the protective layer.

That is, after the light reflecting layer is formed, an ultraviolet ray-curable resin (e.g., SD640 manufactured by Dainippon Ink and Chemicals Incorporated) is applied to the light reflecting layer by a spin coating method to form an adhesive layer having a thickness of 20 to 60 µm. Then, a polycarbonate substrate (thickness: 0.6 mm) serving as a protective substrate is put on the formed adhesive layer, and the resultant is irradiated with ultraviolet rays from the substrate side to cure the ultraviolet ray-curable resin and bond these layers and the protective substrate.

An information medium is manufactured in the above manner, which has a laminate including on the substrate the recording layer, the light reflecting layer, and the protective layer or the adhesive layer and the protective substrate (dummy substrate).

The information medium of the invention may be applied to information media which have a narrower track pitch than conventional DVDs and which can record and reproduce information with laser light having a smaller wavelength than laser light used for current DVDs, by appropriately selecting the track pitch of the pre-groove formed on the substrate or the materials of the recording layer.

As for the thickness of the information medium of the invention, the lower limit of thickness is preferably 0.3 mm, more preferably 0.5 mm, and still more preferably 0.7 mm. Also, the upper limit of thickness is preferably 100 mm, more preferably 20 mm, and still more preferably 5 mm. When the information medium is too thin, defects may occur by bending it. When the information medium is too thick, inferior removability may be obtained.

### EXAMPLES

The invention will be explained in more detail by way of examples, which are not intended to limit the invention. In the examples, all designations of parts and % indicate parts by mass and mass percentage (% by mass), respectively.

### Example 1

### <<Production of a disk substrate>>

A polycarbonate resin (Panlight AD5503 (trade name of the resin) manufactured by Teijin Limited) was injected into an injection molding machine with a built-in stamper which could form a substrate with a groove formed at a predetermined track pitch and molded at 115°C to produce a disk-shaped resin substrate made of polycarbonate. The obtained disk-shaped resin substrate had a diameter of 120 mm and a thickness of 1.2 mm and a spiral concave groove (pre-groove) formed on the surface thereof. The track pitch, the width, and the depth of the concave groove were 1.6 µm, 500 nm, and 180 nm, respectively.

2.5 g of a cyanine dye shown by the following structure was dissolved in 100 ml of 2,2,3,3-tetrafluoropropanol to prepare a coating solution for forming a recording layer. This coating solution was applied to the surface of the polycarbonate disk substrate thus obtained, on which surface the pre-groove was formed, by spin coating to form a dye recording layer having a thickness of 190 nm at a groove portion and a thickness of 110 nm at land portions.

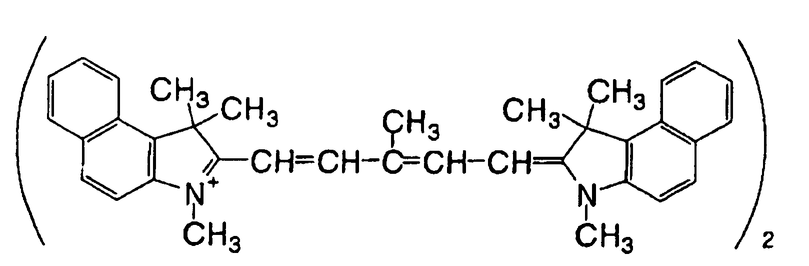

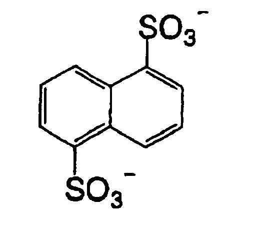

Next, silver was sputtered on the dye recording layer with a DC magnetron Sputter device to form a light reflecting layer made of silver and having a thickness of about 120 nm. Further, a UV-curable resin (SD318^{™} manufactured by Dainippon Ink and Chemicals, Incorporated) was applied to the light reflecting layer by a spin coating method while the number of revolutions was changed between 300 to 4,000 rpm. After the coating, the resultant was exposed to ultraviolet rays which a high-pressure mercury lamp emitted from the coating layer side to cure the coating layer. A protective layer having a thickness of 5 µm was thus formed. A CD-R type information medium (optical disk) having the substrate, the dye recording layer, the light reflecting layer and the protective layer was thus produced by the above process.

Next, a printable layer was formed in the following manner on the protective layer on the side opposite to the surface of the medium from which recording or reproducing laser light was introduced.

Ultraviolet ray-curable ink (White No. 3 manufactured by Teikoku Printing Inks Mfg. Co., Ltd.) was applied to the protective layer on the side opposite to the surface of the substrate by screen printing. After the ink had been applied, the resultant was exposed to ultraviolet rays which a metal halide lamp emitted at 80 W/cm from the ink layer side to cure the ink and to form a base layer (white layer) having a thickness of 8 µm. This operation was repeated again to form two ink layers having a total thickness of 16 µm. The screen was a Tetoron screen having a 300 lines/inch mesh, a string diameter of 31 µm and an opening diameter of 38 µm.

Next, the following process was carried out to form a colorant receiving layer on the base layer.

### -Preparation of colorant receiving layer coating solution-

(1) Vapor phase silica microparticles and (2) deionized water in the following composition were mixed and the resultant was stirred for 20 minutes at 10,000 rpm with a high-speed rotary colloid mill (Clearmix manufactured by M technique Co., Ltd.). Then, (3) polyoxyethylene lauryl ether, (4) aqueous ammonia, (5) an aqueous 9 % polyvinyl alcohol solution and (6) diethylene glycol monobutyl ether were added to the resultant dispersion and the resultant was stirred in the same conditions as above to prepare a colorant receiving layer coating solution A.

The ratio by mass of the silica microparticles to the water-soluble resin (PB ratio of the component (1): the component (5)) was 3.5:1 and the pH of the colorant receiving layer coating solution A was 9.5, and the colorant receiving layer showed alkalinity.

### Composition of colorant receiving layer coating solution A

(1) Vapor phase method silica microparticles (inorganic pigment microparticle) (average primary particle diameter: 7 nm) (Aerosil 300 manufactured by Nippon Aerosil Co., Ltd.) 9.9 parts
(2) Deionized water 72.6 parts
(3) Polyoxyethylene lauryl ether (surfactant) (Emulgen 109P (10 %), manufactured by Kao Corporation, and having an HLB value of 13.6) 7.2 parts
(4) Aqueous 17 g/l ammonia solution (pH control agent) 5.3 parts
(5) Aqueous 9 % polyvinyl alcohol solution (water-soluble resin) (PVA 420 manufactured by Kuraray Co., Ltd., and having a saponification value of 81.8 %, and a degree of polymerization of 2,000) 31.4 parts
(6) Diethylene glycol monobutyl ether (compound represented by formula (1)) 0.6 parts

### -Formation of colorant receiving layer-

After the surface of the base layer of the information medium was subjected to corona discharge treatment, the colorant receiving layer coating solution A thus obtained was applied to the surface of the base layer with a bar coater such that the coating amount was 100 ml/m². The resulting layer was then dried at 80°C with a hot air dryer (air speed: 3 to 8 m/sec) until the solid concentration of the coating layer became 20 %. The coating layer showed a decreasing rate of dry speed during this period. A cross-linking agent solution A was applied to the coating layer made of the colorant receiving layer coating solution A just after the solid concentration of the coating layer reached 20 %. The resultant was further dried at 80°C for 5 minutes. An information medium of Example 1 with a colorant receiving layer having a dry film thickness of 30 µm was thus manufactured.

### Composition of cross-linking agent solution A

· Boric acid (6%; cross-linking agent) 25 parts
· Aqueous 20 % solution of PAS-F5000 (mordant manufactured by Nittobo) 7.15 parts
· Deionized water 68.98 parts
· Ammonium chloride (surface pH control agent) 0.2 parts
· Aqueous ammonia solution (25%; pH control agent) 1.67 parts
· Polyoxyethylene lauryl ether (surfactant) (Emulgen 109P (10%) manufactured by Kao Corporation and having an HLB value of 13.6) 2 parts

### Example 2

A substrate made of polycarbonate (Panlight AD5503^{™} manufactured by Teijin Limited), and having a thickness of 0.6 mm, an outside diameter of 120 mm, and an inside diameter of 15 mm was manufactured by injection molding. The substrate had a spiral groove on the surface thereof and LPP on the convex portion of the surface. The depth, the width and the pitch of the groove were 140 nm, 310 nm and 740 nm, respectively.

One gram of a dye mixture obtained by mixing the following oxonol dye (A) and oxonol dye (B) at a mass ratio of 65:35 was dissolved in 100 ml of 2,2,3,3-tetrafluoropropanol to prepare a coating solution for forming a recording layer. This coating solution for forming a recording layer was applied to the surface of the substrate which surface had the groove by a spin coating method while the number of revolutions was changed from 300 to 3,000 rpm. The resultant coating was dried to form a recording layer. The thickness of the recording layer was 150 nm in the groove and 110 nm in land portions, measured by observing the cross-section of the recording layer with SEM.

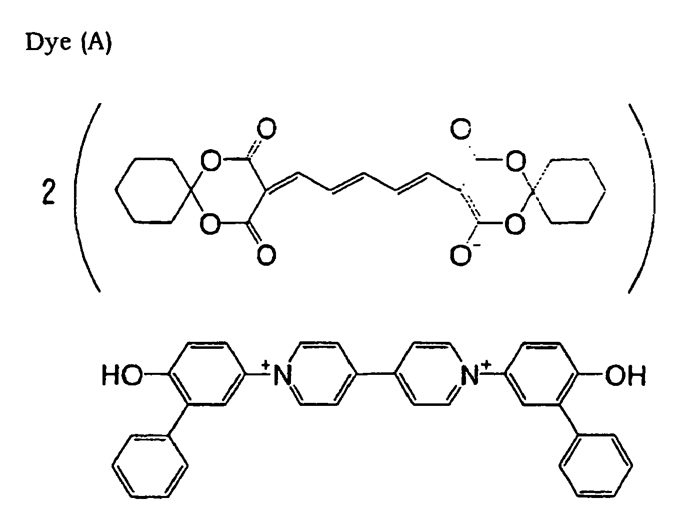

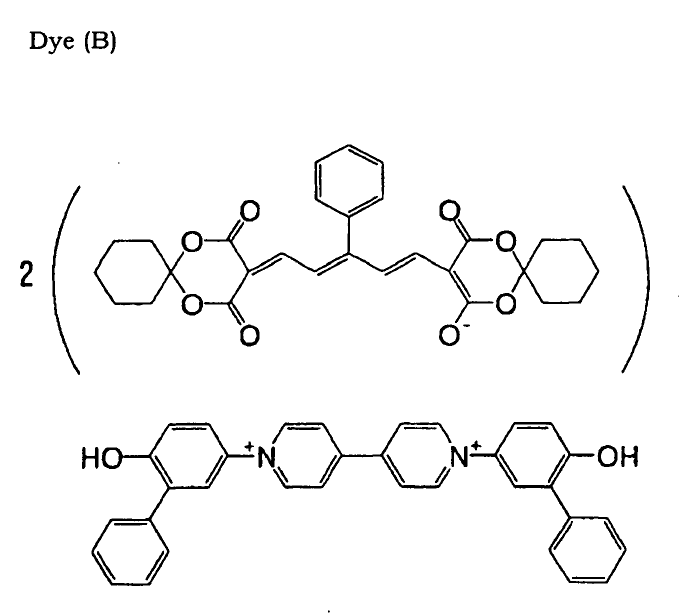

Next, a light reflecting layer made of silver and having a thickness of about 150 nm was formed on the recording layer by DC sputtering in an argon atmosphere. The internal pressure of the chamber was 0.5 Pa.

Moreover, a UV-curable resin (SD-318^{™} manufactured by Dainippon Ink and Chemicals, Incorporated) was circularly dispensed on the light reflecting layer. A polycarbonate protective disk substrate which had a diameter of 120 mm and a thickness of 0.6 mm and which had been separately prepared was concentrically overlapped on the light reflecting layer. The resultant was rotated at 5,000 rpm for 3 seconds to spread a UV-curable resin (SD640 manufactured by Dainippon Ink and Chemicals, Incorporated) on the entire surface of the light reflecting layer and to spin off an excess portion of the UV-curable resin. When the UV-curable resin had been spread on the entire surface, the resultant layer was exposed to ultraviolet rays which a high-pressure mercury lamp emitted to cure the UV-curable resin, whereby the substrate having thereon the recording layer and the reflecting layer was bonded to the protective disk substrate. The total thickness of the bonded layers was 25 µm and the resultant semi-product contained no air bubble.

Then, a base layer and a colorant receiving layer were formed on the surface of the protective disk substrate in the same manner as in Example 1 to manufacture an information medium of Example 2.

### Example 3

An information medium of Example 3 was manufactured in the same manner as in Example 1 except that the thickness of the colorant receiving layer was altered to 45 µm in the formation of the colorant receiving layer.

### Example 4

An information medium of Example 4 was manufactured in the same manner as in Example 2 except that the thickness of the colorant receiving layer was altered to 60 µm in the formation of the colorant receiving layer.

### Comparative Example 1

An information medium of Comparative Example 1 was manufactured in the same manner as in Example 1 except that the colorant receiving layer was replaced with one which was obtained by screen printing of an ultraviolet-curable resin (UV SP 81019B manufactured by Teikoku Printing Inks Mfg. Co., Ltd.) and by curing the resin with ultraviolet rays.

### Comparative Example 2

An information medium of Comparative Example 2 was manufactured in the same manner as in Example 1 except that the thickness of the colorant receiving layer was altered to 20 µm in the formation of the colorant receiving layer.

### Comparative Example 3

An information medium of Comparative Example 3 was manufactured in the same manner as in Example 2 except that the thickness of the colorant receiving layer was altered to 70 µm in the formation of the colorant receiving layer.

### <Evaluation of performance>

The information media of Examples 1 to 4 and Comparative Examples 1 to 3 obtained above were evaluated by the following methods. Printing

An image was printed on the printable layer of each of the information media of Examples 1 to 4 and Comparative Examples 1 to 3 with an ink jet printer (PM-970C manufactured by Seiko Epson Corporation).

### Evaluation of image quality

Then, quality of the printed image on each of the information media of Examples 1 to 4 and Comparative Examples 1 to 3 was sensorily evaluated with naked eyes by ten persons. The results are shown in Table 1. The mark "A" in Table 1 shows that the image was judged to be more beautiful than an image on a conventional product which image was printed in the same manner as above by the ten persons. The mark "B" shows that the quality of the image was judged to be equal or inferior to that of the image on the conventional product by the ten persons. Evaluation of blurring

A lattice-like line pattern (line width: 0.28 mm) in which magenta ink and black ink adjoined was printed on the printable layer of each of the information media of Examples 1 to 4 and Comparative Examples 1 to 3 with the above printer. After the medium with the pattern had been allowed to stand for 3 hours, the width of the black line portion was measured and evaluated in accordance with the following standard. The results of evaluation are shown in Table 1.

### Standard

A: Occurrence of blurring over time was hardly found, showing that the state of the line was good (Line width: 0.28 to 0.30 mm).
B: Blurring over time was slightly found, which was not problematic in practical use (Line width: 0.31 to 0.35 mm).
C: Blurring over time was significantly found, which was problematic in practical use (Line width: 0.35 mm or more).

**Table 1**

| | Thickness of colorant receiving layer (µm) | Blurring | Image quality |
|---|---|---|---|
| Example 1 | 30 | A | B |
| Example 2 | 30 | A | B |
| Example 3 | 45 | A | B |
| Example 4 | 60 | A | B |
| Comparative Example 1 | 30 | B | C |
| Comparative Example 2 | 20 | B | C |
| Comparative Example 3 | 70 | A | C |

As is clear from Table 1, the information media of Examples 1 to 4 caused little blurring, allowing a high quality image to be printed. To the contrary, the information media of Comparative Examples 1 and 2 caused much blurring and had image quality equivalent to that of conventional products. Although the information medium of Comparative Example 3 had no problem as to blurring and image quality, it had inferior mechanical characteristics such as warpage and vertical deviation. The information media of Examples 1 to 4 had high resolution and had fine texture. Also, hair could be clearly printed on these information media. To the contrary, the information media of Comparative Examples 1 and 2 had inferior print quality, low resolution and no fine texture.

## Claims

1. An optical disk comprising a printable layer containing a base layer obtained by curing a radiation-curable resin and a colorant receiving layer, wherein the colorant receiving layer contains at least microparticles, a binder and a cross-linking agent and has a thickness of 30 to 60 µm.

2. An optical disk according to claim 1, wherein the radiation-curable resin is an ultraviolet ray-curable resin.

3. An optical disk according to claim 1 or claim 2, wherein the microparticles are at least one type selected from vapor phase silica, pseudo boehmite and aluminum oxide, the binder is polyvinyl alcohol, the cross-linking agent is a boron compound, and the colorant receiving layer further contains a mordant.

4. An optical disk according to claim 1 or claim 2, wherein the colorant receiving layer further contains at least one of a compound represented by the following formula (1) and a compound represented by the following formula (2):
RO(CH₂CH₂O)ₙH Formula (1)
wherein R represents one of a saturated hydrocarbon group having 1 to 12 carbon atoms, an unsaturated hydrocarbon group having 1 to 12 carbon atoms, a phenyl group and an acyl group, and n denotes an integer from 1 to 3;
RO(CH₂CH(CH₃)O)ₙH Formula (2)
wherein R represents one of a saturated hydrocarbon group having 1 to 12 carbon atoms, an unsaturated hydrocarbon group having 1 to 12 carbon atoms, a phenyl group and an acyl group, and n denotes an integer from 1 to 3.

5. An optical disk according to claim 3, wherein the colorant receiving layer further contains at least one of a compound represented by the following formula (1) and a compound represented by the following formula (2):
RO(CH₂CH₂O)ₙH Formula (1)
wherein R represents one of a saturated hydrocarbon group having 1 to 12 carbon atoms, an unsaturated hydrocarbon group having 1 to 12 carbon atoms, a phenyl group and an acyl group, and n denotes an integer from 1 to 3;
RO(CH₂CH(CH₃)O)ₙH Formula (2)
wherein R represents one of a saturated hydrocarbon group having 1 to 12 carbon atoms, an unsaturated hydrocarbon group having 1 to 12 carbon atoms, a phenyl group and an acyl group, and n denotes an integer from 1 to 3.

6. An optical disk according to claim 4, wherein the compound represented by formula (1) and the compound represented by formula (2) are water-soluble.

7. An optical disk according to claim 5, wherein the compound represented by formula (1) and the compound represented by formula (2) are water-soluble.

8. An optical disk according to claim 6, wherein the R in formulae (1) and (2) is a saturated hydrocarbon group having 1 to 4 carbon atoms.

9. An optical disk according to claim 7, wherein the R in formulae (1) and (2) is a saturated hydrocarbon group having 1 to 4 carbon atoms.

10. An optical disk according to claim 7, wherein the colorant receiving layer is obtained by applying a coating solution containing the at least one of the compound represented by formula (1) and the compound represented by formula (2), the microparticles and the binder, and applying a solution containing the cross-linking agent and the mordant to a resultant coating layer either simultaneously with the applying of the coating solution, or during the course of drying of the coating layer and before the coating layer exhibits a decreasing rate of dry speed, followed by curing the coating layer.

11. An optical disk according to claim 8, wherein the colorant receiving layer is obtained by applying a coating solution containing the at least one of the compound represented by formula (1) and the compound represented by formula (2), the microparticles and the binder, and applying a solution containing the cross-linking agent and a mordant to a resultant coating layer either simultaneously with the applying of the coating solution, or during the course of drying of the coating layer and before the coating layer exhibits a decreasing rate of dry speed, followed by curing the coating layer.

12. An optical disk according to claim 9, wherein the colorant receiving layer is obtained by applying a coating solution containing the at least one of the compound represented by formula (1) and the compound represented by formula (2), the microparticles and the binder, and applying a solution containing the cross-linking agent and a mordant to a resultant coating layer either simultaneously with the applying of the coating solution, or during the course of drying of the coating layer and before the coating layer exhibits a decreasing rate of dry speed, followed by curing the coating layer.

13. An optical disk according to claim 7, wherein the colorant receiving layer is obtained by applying a coating solution prepared by adding and re-dispersing a solution containing the at least one of the compound represented by formula (1) and the compound represented by formula (2), the binder and the cross-linking agent in an aqueous dispersion comprising the microparticles and a dispersant, and applying a solution containing the cross-linking agent and the mordant to a resultant coating layer either simultaneously with the applying of the coating solution, or during the course of drying of the coating layer and before the coating layer exhibits a decreasing rate of dry speed, followed by curing the coating layer.

14. An optical disk according to claim 8, wherein the colorant receiving layer is obtained by applying a coating solution prepared by adding and re-dispersing a solution containing the at least one of the compound represented by formula (1) and the compound represented by formula (2), the binder and the cross-linking agent in an aqueous dispersion comprising the microparticles and a dispersant, and applying a solution containing the cross-linking agent and a mordant to a resultant coating layer either simultaneously with the applying of the coating solution, or during the course of drying of the coating layer and before the coating layer exhibits a decreasing rate of dry speed, followed by curing the coating layer.

15. An optical disk according to claim 9, wherein the colorant receiving layer is obtained by applying a coating solution prepared by adding and re-dispersing a solution containing the at least one of the compound represented by formula (1) and the compound represented by formula (2), the binder and the cross-linking agent in an aqueous dispersion comprising the microparticles and a dispersant, and applying a solution containing the cross-linking agent and the mordant to a resultant coating layer either simultaneously with the applying of the coating solution, or during the course of drying of the coating layer and before the coating layer exhibits a decreasing rate of dry speed, followed by curing the coating layer.

## Patentansprüche

1. Optische Platte, umfassend eine bedruckbare Schicht, enthaltend eine Grundschicht, erhalten durch Härten eines durch Strahlung härtbaren Harzes, und eine Färbemittelempfangsschicht, worin die Färbemittelempfangsschicht wenigstens Mikroteilchen, ein Bindemittel und ein Vernetzungsmittel enthält und eine Dicke von 30 bis 60 µm hat.

2. Optische Platte gemäß Anspruch 1, worin das durch Strahlung härtbare Harz ein durch Ultraviolettstrahlen härtbares Harz ist.

3. Optische Platte gemäß Anspruch 1 oder 2, worin die Mikroteilchen wenigstens ein Typ, ausgewählt aus Dampfphasen-Siliciumdioxid, Pseudoböhmit und Aluminiumoxid, sind, das Bindemittel Polyvinylalkohol ist, das Vernetzungsmittel eine Borverbindung ist und die Färbemittelempfangsschicht weiter ein Beizmittel enthält.

4. Optische Platte gemäß Anspruch 1 oder 2, worin die Färbemittelempfangsschicht ferner wenigstens eine Verbindung, wiedergegeben durch die folgende Formel (1), und eine Verbindung, wiedergegeben durch die folgende Formel (2), enthält:
RO(CH₂CH₂O)ₙH Formel (1),
worin R ein Glied aus der Gruppe einer gesättigten Kohlenwasserstoffgruppe mit 1 bis 12 Kohlenstoffatomen, einer ungesättigten Kohlenwasserstoffgruppe mit 1 bis 12 Kohlenstoffatomen, einer Phenylgruppe und einer Acylgruppe bedeutet, und n eine ganze Zahl von 1 bis 3 bedeutet,
RO(CH₂CH(CH₃)O)ₙH Formel (2),
worin R ein Glied aus der Gruppe einer gesättigten Kohlenwasserstoffgruppe mit 1 bis 12 Kohlenstoffatomen, einer ungesättigten Kohlenwasserstoffgruppe mit 1 mit 12 Kohlenstoffatomen, einer Phenylgruppe und einer Acylgruppe bedeutet, und n eine ganze Zahl von 1 bis 3 bedeutet.

5. Optische Platte gemäß Anspruch 3, worin die Färbemittelempfangsschicht weiter wenigstens ein Glied aus der Gruppe einer Verbindung, wiedergegeben durch die folgende Formel (1), und einer Verbindung, wiedergegeben durch die folgende Formel (2), enthält:
RO(CH₂CH₂O)ₙH Formel (1),
worin R ein Glied aus der Gruppe einer gesättigten Kohlenwasserstoffgruppe mit 1 bis 12 Kohlenstoffatomen, einer ungesättigten Kohlenwasserstoffgruppe mit 1 bis 12 Kohlenstoffatomen, einer Phenylgruppe und einer Acylgruppe bedeutet, und n eine ganze Zahl von 1 bis 3 bedeutet,
RO(CH₂CH(CH₃)O)ₙH Formel (2),
worin R ein Glied aus der Gruppe einer gesättigten Kohlenwasserstoffgruppe mit 1 bis 12 Kohlenstoffatomen, einer ungesättigten Kohlenwasserstoffgruppe mit 1 mit 12 Kohlenstoffatomen, einer Phenylgruppe und einer Acylgruppe bedeutet, und n eine ganze Zahl von 1 bis 3 bedeutet.

6. Optische Platte gemäß Anspruch 4, worin die Verbindung, wiedergegeben durch die Formel (1), und die Verbindung, wiedergegeben durch die Formel (2), wasserlöslich sind.

7. Optische Platte gemäß Anspruch 5, worin die Verbindung, wiedergegeben durch die Formel (1), und die Verbindung, wiedergegeben durch die Formel (2), wasserlöslich sind.

8. Optische Platte gemäß Anspruch 6, worin R in den Formeln (1) und (2) eine gesättigte Kohlenwasserstoffgruppe mit 1 bis 4 Kohlenstoffatomen ist.

9. Optische Platte gemäß Anspruch 7, worin R in den Formeln (1) und (2) eine gesättigte Kohlenwasserstoffgruppe mit 1 bis 4 Kohlenstoffatomen ist.

10. Optische Platte gemäß Anspruch 7, worin die Färbemittelempfangsschicht erhalten wird durch Aufbringen einer Beschichtungslösung, enthaltend das wenigstens eine Glied aus der Gruppe der Verbindung, wiedergegeben durch die Formel (1), und der Verbindung, wiedergegeben durch die Formel (2), die Mikroteilchen und das Bindemittel, und Aufbringen einer Lösung, enthaltend das Vernetzungsmittel und das Beizmittel, auf eine resultierende Beschichtung entweder gleichzeitig mit dem Aufbringen der Beschichtungslösung oder während des Verlaufs des Trocknens der Beschichtung und bevor die Beschichtung eine abnehmende Rate der Trocknungsgeschwindigkeit aufweist, gefolgt von Härten der Beschichtung.

11. Optische Platte gemäß Anspruch 8, worin die Färbemittelempfangsschicht erhalten wird durch Aufbringen einer Beschichtungslösung, enthaltend das wenigstens eine Glied aus der Gruppe der Verbindung, wiedergegeben durch die Formel (1), und der Verbindung, wiedergegeben durch die Formel (2), die Mikroteilchen und das Bindemittel, und Aufbringen einer Lösung, enthaltend das Vernetzungsmittel und ein Beizmittel, auf eine resultierende Beschichtung entweder gleichzeitig mit dem Aufbringen der Beschichtungslösung oder während des Verlaufs des Trocknens der Beschichtung und bevor die Beschichtung eine abnehmende Rate der Trocknungsgeschwindigkeit aufweist, gefolgt von Härten der Beschichtung.

12. Optische Platte gemäß Anspruch 9, worin die Färbemittelempfangsschicht erhalten wird durch Aufbringen einer Beschichtungslösung, enthaltend das wenigstens eine Glied aus der Gruppe der Verbindung, wiedergegeben durch die Formel (1), und der Verbindung, wiedergegeben durch die Formel (2), die Mikroteilchen und das Bindemittel, und Aufbringen einer Lösung, enthaltend das Vernetzungsmittel und ein Beizmittel, auf eine resultierende Beschichtung entweder gleichzeitig mit dem Aufbringen der Beschichtungslösung oder während des Verlaufs des Trocknens der Beschichtung und bevor die Beschichtung eine abnehmende Rate der Trocknungsgeschwindigkeit aufweist, gefolgt von Härten der Beschichtung.

13. Optische Platte gemäß Anspruch 7, worin die Färbemittelempfangsschicht erhalten wird durch Aufbringen einer Beschichtungslösung, hergestellt durch Zusetzen und Wiederdispergieren einer Lösung, enthaltend das wenigstens eine Glied aus der Gruppe der Verbindung, wiedergegeben durch die Formel (1), und der Verbindung, wiedergegeben durch die Formel (2), das Bindemittel und das Vernetzungsmittel in einer wässrigen Dispersion, umfassend die Mikroteilchen und ein Dispergiermittel, und Aufbringen einer Lösung, enthaltend das Vernetzungsmittel und das Beizmittel auf eine resultierende Beschichtung entweder gleichzeitig mit dem Aufbringen der Beschichtungslösung oder während des Verlaufs des Trocknens der Beschichtung und bevor die Beschichtung eine abnehmende Rate der Trocknungsgeschwindigkeit aufweist, gefolgt von Härten der Beschichtung.

14. Optische Platte gemäß Anspruch 8, worin die Färbemittelempfangsschicht erhalten wird durch Aufbringen einer Beschichtungslösung, hergestellt durch Zusetzen und Wiederdispergieren einer Lösung, enthaltend das wenigstens eine Glied aus der Gruppe der Verbindung, wiedergegeben durch die Formel (1), und der Verbindung, wiedergegeben durch die Formel (2), das Bindemittel und das Vernetzungsmittel in einer wässrigen Dispersion, umfassend die Mikroteilchen und ein Dispergiermittel, und Aufbringen einer Lösung, enthaltend das Vernetzungsmittel und ein Beizmittel auf eine resultierende Beschichtung entweder gleichzeitig mit dem Aufbringen der Beschichtungslösung oder während des Verlaufs des Trocknens der Beschichtung und bevor die Beschichtung eine abnehmende Rate der Trocknungsgeschwindigkeit aufweist, gefolgt von Härten der Beschichtung.

15. Optische Platte gemäß Anspruch 9, worin die Färbemütelempfangsschicht erhalten wird durch Aufbringen einer Beschichtungslösung, hergestellt durch Zusetzen und Wiederdispergieren einer Lösung, enthaltend das wenigstens eine Glied aus der Gruppe der Verbindung, wiedergegeben durch die Formel (1), und der Verbindung, wiedergegeben durch die Formel (2), das Bindemittel und das Vernetzungsmittel in einer wässrigen Dispersion, umfassend die Mikroteilchen und ein Dispergiermittel, und Aufbringen einer Lösung, enthaltend das Vernetzungsmittel und das Beizmittel auf eine resultierende Beschichtung entweder gleichzeitig mit dem Aufbringen der Beschichtungslösung oder während des Verlaufs des Trocknens der Beschichtung und bevor die Beschichtung eine abnehmende Rate der Trocknungsgeschwindigkeit aufweist, gefolgt von Härten der Beschichtung.

## Revendications

1. Disque optique comprenant une couche imprimable contenant une couche de base obtenue en durcissant une résine durcissable au rayonnement et une couche de réception de colorant, dans lequel la couche de réception de colorant contient au moins des microparticules, un liant et un agent de réticulation et a une épaisseur de 30 à 60 µm.

2. Disque optique selon la revendication 1, dans lequel la résine durcissable au rayonnement est une résine durcissable au rayonnement ultraviolet.

3. Disque optique selon la revendication 1 ou la revendication 2, dans lequel les microparticules sont au moins un type choisi parmi la silice en phase vapeur, la pseudo-boehmite et un oxyde d'aluminium, le liant est du poly(alcool vinylique), l'agent de réticulation est un composé de bore et la couche de réception de colorant contient en outre un mordant.

4. Disque optique selon la revendication 1 ou la revendication 2, dans lequel la couche de réception de colorant contient en outre au moins un composé représenté par la formule (I) suivante et un composé représenté par la formule (2) suivante :
RO(CH₂CH₂O)ₙH Formule (1)
où R représente l'un parmi un groupe hydrocarboné saturé comportant 1 à 12 atomes de carbone, un groupe hydrocarboné insaturé comportant 1 à 12 atomes de carbone, un groupe phényle et un groupe acyle, et n désigne un nombre entier de 1 à 3 ;
RO(CH₂CH(CH₃)O)ₙH Formule (2)
où R représente l'un parmi un groupe hydrocarboné saturé comportant 1 à 12 atomes de carbone, un groupe hydrocarboné insaturé comportant 1 à 12 atomes de carbone, un groupe phényle et un groupe acyle, et n désigne un nombre entier de 1 à 3.

5. Disque optique selon la revendication 3, dans lequel la couche de réception de colorant contient en outre au moins l'un parmi un composé représenté par la formule (1) suivante et un composé représenté par la formule (2) suivante :
RO(CH₂CH₂O)ₙH Formule (1)
où R représente l'un parmi un groupe hydrocarboné saturé comportant 1 à 12 atomes de carbone, un groupe hydrocarboné insaturé comportant 1 à 12 atomes de carbone, un groupe phényle et un groupe acyle, et n désigne un nombre entier de 1 à 3 ;
RO(CH₂CH(CH₃)O)ₙH Formule (2)
où R représente l'un parmi un groupe hydrocarboné saturé comportant 1 à 12 atomes de carbone, un groupe hydrocarboné insaturé comportant 1 à 12 atomes de carbone, un groupe phényle et un groupe acyle, et n désigne un nombre entier de 1 à 3.

6. Disque optique selon la revendication 4, dans lequel le composé représenté par la formule (1) et le composé représenté par la formule (2) sont solubles dans l'eau.

7. Disque optique selon la revendication 5, dans lequel le composé représenté par la formule (1) et le composé représenté par la formule (2) sont solubles dans l'eau.

8. Disque optique selon la revendication 6, dans lequel le R dans les formules (1) et (2) est un groupe hydrocarboné saturé comportant 1 à 4 atomes de carbone.

9. Disque optique selon la revendication 7, dans lequel le R dans les formules (1) et (2) est un groupe hydrocarboné saturé comportant 1 à 4 atomes de carbone.

10. Disque optique selon la revendication 7, dans lequel la couche de réception de colorant est obtenue en appliquant une solution de revêtement contenant le au moins un parmi le composé représenté par la formule (1) et le composé représenté par la formule (2), les microparticules et le liant, et en appliquant une solution contenant l'agent de réticulation et le mordant à une couche de revêtement résultante soit simultanément avec l'application de la solution de revêtement, soit au cours du séchage de la couche de revêtement et avant que la couche de revêtement ne présente un taux décroissant de vitesse de séchage, suivi par un durcissement de la couche de revêtement.

11. Disque optique selon la revendication 8, dans lequel la couche de réception de colorant est obtenue en appliquant une solution de revêtement contenant le au moins un parmi le composé représenté par la formule (1) et le composé représenté par la formule (2), les microparticules et le liant, et l'application d'une solution contenant l'agent de réticulation et un mordant à une solution de revêtement résultante soit simultanément avec l'application de la solution de revêtement, soit au cours du séchage de la couche de revêtement et avant que la couche de revêtement ne présente un taux décroissant de vitesse de séchage, suivi par un durcissement de la couche de revêtement.

12. Disque optique selon la revendication 9, dans lequel la couche de réception de colorant est obtenue en appliquant une solution de revêtement contenant le au moins un parmi le composé représenté par la formule (1) et le composé représenté par la formule (2), les microparticules et le liant, et l'application d'une solution contenant l'agent de réticulation et un mordant à une couche de revêtement résultante soit simultanément avec l'application de la solution de revêtement, soit au cours du séchage de la couche de revêtement et avant que la couche de revêtement ne présente un taux décroissant de vitesse de séchage, suivi par un durcissement de la couche de revêtement.

13. Disque optique selon la revendication 7, dans lequel la couche de réception de colorant est obtenue en appliquant une solution de revêtement préparée en ajoutant et en re-dispersant une solution contenant le au moins un parmi le composé représenté par la formule (1) et le composé représenté par la formule (2), le liant et l'agent de réticulation dans une dispersion aqueuse contenant les microparticules et un dispersant, et l'application d'une solution contenant l'agent de réticulation et le mordant à une couche de revêtement résultante soit simultanément avec l'application de la solution de revêtement, soit au cours du séchage de la couche de revêtement et avant que la couche de revêtement ne présente un taux décroissant de vitesse de séchage, suivi par un durcissement de la couche de revêtement.

14. Disque optique selon la revendication 8, dans lequel la couche de réception de colorant est obtenue en appliquant une solution de revêtement préparée en ajoutant et en re-dispersant une solution contenant le au moins un parmi le composé représenté par la formule (1) et le composé représenté par la formule (2), le liant et l'agent de réticulation dans une dispersion aqueuse comprenant les microparticules et un dispersant, et l'application d'une solution contenant l'agent de réticulation et un mordant à une couche de revêtement résultante soit simultanément avec l'application de la solution de revêtement, soit au cours du séchage de la couche de revêtement et avant que la couche de revêtement ne présente un taux décroissant de vitesse de séchage, suivi par un durcissement de la couche de revêtement.

15. Disque optique selon la revendication 9, dans lequel la couche de réception de colorant est obtenue en appliquant une solution de revêtement préparée en ajoutant et en re-dispersant une solution contenant le au moins un parmi le composé représenté par la formule (1) et le composé représenté par la formule (2), le liant et l'agent de réticulation dans une dispersion aqueuse comprenant les microparticules et un dispersant, et l'application d'une solution contenant l'agent de réticulation et le mordant à une couche de revêtement résultante soit simultanément avec l'application de la solution de revêtement, soit au cours du séchage de la couche de revêtement et avant que la couche de revêtement ne présente un taux décroissant de vitesse de séchage, suivi par un durcissement de la couche de revêtement.
